# EUROPEAN PATENT APPLICATION

(11) **EP 4 656 946 A1**
(43) Date of publication of application: **03.12.2025**
(21) Application number: 25178168.8
(22) Date of filing: 22.05.2025
(51) Int. Cl.: F24C 7/08, F24C 15/02, H05B 6/64

(54) **COOKING APPLIANCE WITH DIGITAL CONTROLLER DOOR AND METHOD FOR CONTROLLING COOKING APPLIANCE**

(30) Priority: 30.05.2024 KR 20240070766; 16.12.2024 KR 20240187290
(71) Applicant: LG Electronics Inc., Yeongdeungpo-gu Seoul 07336 (KR)
(72) Inventor: KIM, Dong Hun, 07796 Seoul (KR); KIM, Young Jin, 07796 Seoul (KR); KIM, Jeongkil, 07796 Seoul (KR); JANG, Junhwan, 07796 Seoul (KR); KWON, Geon, 07796 Seoul (KR); LEE, Hansu, 07796 Seoul (KR)
(74) Representative: Vossius & Partner Patentanwälte Rechtsanwälte mbB

(57) **Abstract**

Disclose are a cooking appliance including a digital controller door and a method for controlling the cooking appliance, and the cooking appliance including the digital controller door includes a functional unit configured to provide a cooking function, wherein the functional unit includes a function controller for controlling an operation of the functional unit; and the digital controller door configured to provide a human interface, wherein digital controller door includes an operating system (OS) controller for controlling the digital controller door, wherein the function controller and the OS controller transmit or receive a packet to or from each other, wherein the function controller or the OS controller is configured to restrict a function of the functional unit or a function of the digital controller door or to cancel a function being currently executed, based on a transmission and reception status of the packet between the function controller and the OS controller.

## Description

The present invention relates to a cooking appliance including a digital controller door and a method for controlling the cooking appliance.

### Description of Related Art

A cooking appliance is a home appliance that cooks food using microwaves belonging to electromagnetic waves and/or heater heat. The cooking appliance may be generally provided with a cavity as a space in which food is placed and cooked, and a door for opening and closing the cavity.

When the cooking appliance is installed indoors, it is necessary to consider efficient use of the cooking appliance, saving of an installation space thereof, etc.

For this reason, the cooking appliance may be disposed at a position adjacent to a heating cooking device, for example, a heating oven, a gas stove, etc. Specifically, the cooking appliance may be disposed on top of the heating cooking device.

When the cooking appliance is disposed on top of the heating cooking device, the user may conveniently cook food by reducing the movement of the user in an environment in which the cooking appliance and the heating cooking device are adjacent to each other. In addition, heat, oil vapor, etc. as generated from the heating cooking device may be discharged to the outside using the cooking appliance as a hood.

In a state in which the cooking appliance is disposed on top of the heating cooking device, heat, oil vapor, or the like generated from the heating cooking device disposed under the cooking appliance may adversely affect the operation of the cooking appliance.

For example, a display may be mounted on a front surface of a door provided in the cooking appliance and may be configured to provide various information to the user. The user may know a cooking state of the cooked food through the display.

In addition, when the display is connected to another home appliance so as to serve as a hub of the home appliances, information other than cooking food may be obtained through the display. In addition, the user may input a command necessary for cooking and various other commands to the display in a touch manner.

In a state in which the cooking appliance is disposed on top of the heating cooking device, heat, oil vapor, etc. generated from the heating cooking device may invade into parts mounted on the display and the door.

It is necessary to suppress damage to or malfunction of the display of the cooking appliance and other components mounted on the door due to such heat, oil vapor, or the like.

The heat generated from the heating cooking device may rise under a convection to heat the display mounted on the cooking appliance, thereby causing the display to be damaged by the heat or causing a malfunction of the display.

Therefore, proper cooling is required so that the display is not heated. At least one fan device may be used to cool the display. However, when a large number of fan devices are used to cool the display or the fan device is rotated at an excessively high speed, noise of the fan device may make the user uncomfortable and excessive electricity may be consumed by the fan device.

A component for controlling the display and a component for controlling the operation of the cooking appliance operate in different operating manners. The component that controls the display may act as an information processing unit in that it interacts with the user. On the other hand, the cooking appliance may repeatedly perform a specific function.

Accordingly, a scheme of defining a control of these two components or information flow manner therebetween and setting a process corresponding thereto so that the cooking appliance may be safely controlled in a normal operation and an abnormal operation situation is required.

Thus, the present invention has been devised to solve the above problem. A purpose of the present invention is to provide various software or hardware of a door coupled to the cooking appliance cooperates smoothly with a control component for controlling the cooking appliance such that the cooking appliance may be safely controlled.

Further, a purpose of the present invention is to provide technology for controlling a cooking appliance and control component of a door coupled to the cooking appliance and a control component disposed in the cooking appliance cooperate with each other.

Purposes according to the present invention are not limited to the above-mentioned purpose. Other purposes and advantages according to the present invention that are not mentioned may be understood based on following descriptions, and may be more clearly understood based on embodiments according to the present invention. Further, it will be easily understood that the purposes and advantages according to the present invention may be realized using means shown in the claims or combinations thereof.

The present invention is specified by the independent claims. Preferred embodiments are defined by the dependent claims. A cooking appliance including a digital controller door according to the present invention includes a functional unit configured to provide a cooking function, wherein the functional unit includes a function controller for controlling an operation of the functional unit; and the digital controller door is preferably configured to provide a human interface, wherein digital controller door includes an operating system (OS) controller for controlling the digital controller door, wherein the function controller and the OS controller transmit or receive a packet to or from each other, wherein the function controller or the OS controller is configured to restrict a function of the functional unit or a function of the digital controller door or to cancel a function being currently executed, based on a transmission and reception status of the packet between the function controller and the OS controller.

A method for controlling a cooking appliance including a digital controller door according to an embodiment of the present invention is provided. The cooking appliance includes: a functional unit configured to provide a cooking function, wherein the functional unit includes a function controller for controlling an operation of the functional unit; and the digital controller door is preferably configured to provide a human interface, wherein digital controller door includes an operating system (OS) controller for controlling the digital controller door. The method comprises: transmitting or receiving, by the function controller and the OS controller, a packet to or from each other; checking, by the function controller or the OS controller, a transmission and reception status of the packet; and restricting, by the function controller or the OS controller, a function of the functional unit or a function of the digital controller door, or cancelling, by the function controller or the OS controller, a function being currently executed, based on the transmission and reception status of the packet.

A cooking appliance including a digital controller door according to the present invention includes a functional unit configured to provide a cooking function; the digital controller door is preferably configured to provide a human interface; and a controller configured to control the functional unit and the digital controller door, wherein the functional unit and the digital controller door transmit or receive a packet to or from each other, wherein the controller is configured to restrict a function of at least one of the functional unit or the digital controller door or to cancel a function being currently executed, based on a transmission and reception status of the packet between the functional unit and the digital controller door.

A cooking appliance including a digital controller door according to the present invention includes a functional unit configured to provide a cooking function, wherein the functional unit includes a function controller for controlling an operation of the functional unit; and the digital controller door is preferably configured to provide a human interface, wherein digital controller door includes an operating system (OS) controller for controlling the digital controller door, wherein the function controller and the OS controller transmit or receive a packet to or from each other, wherein the function controller performs an immediate cancellation mechanism or the OS controller performs a suspended cancellation mechanism, based on a transmission and reception status of the packet between the function controller and the OS controller.

A cooking appliance according to the present invention includes a functional unit, a digital controller door, a operating system (OS) controller, and a function controller, wherein the functional unit includes a cavity for receiving food, and one or more functional components, and the functional unit is configured to provide a cooking function; wherein the digital controller door is coupled to the functional unit, and the digital controller door includes a display configured to provide a user interface, and one or more door-mounted peripheral devices; wherein the OS controller is configured to control an operation of the digital controller door; and wherein the function controller is configured to monitor a communication between the function controller and the OS controller, in response to a communication error occurring between the function controller and the OS controller, perform at least one of a restriction operation to restrict at least one of the one or more functional components of the functional unit, a reset operation to reset the OS controller and turn off the display, and a report generation operation to store information related to the communication error.

A cooking appliance according to the present invention includes a functional unit, a digital controller door, a function controller, and a operating system (OS) controller, wherein the functional unit includes a cavity for receiving food, and one or more functional components, the functional unit being configured to provide a cooking function; wherein the digital controller door is coupled to the functional unit, the digital controller door including a display configured to provide a user interface, and one or more door-mounted peripheral devices; wherein the function controller is configured to control an operation of the functional unit; and wherein the OS controller is configured to monitor a communication between the OS controller and the function controller, in response to a communication error occurring between the OS controller and the function controller, perform at least one of a channel reset operation to reset a communication channel between the controller door and the function controller, a cancelation operation to cancel a function currently being executed by the functional unit, and an error display operation to display an error message on the display of the digital controller door.

A method for controlling a cooking appliance according to an embodiment of the present invention is provided. The method comprises: displaying a user interface by a display of a digital controller door that is coupled to a functional unit of the cooking appliance, the functional unit including a cavity for receiving food, and one or more functional components; controlling, by a operating system (OS) controller, an operation of the digital controller door; monitoring, by a function controller, a communication between the function controller and the OS controller; and in response to a communication error occurring between the function controller and the OS controller, performing by the function controller at least one of restricting at least one of the one or more functional components of the functional unit, resetting the OS controller, and generating a report to store information related to the communication error.

A method of controlling a cooking appliance according to an embodiment of the present invention is provided. The method comprises: displaying a user interface by a display of a digital controller door that is coupled to a functional unit of the cooking appliance, the functional unit including a cavity for receiving food, and one or more functional components; controlling, by a function controller, an operation of the functional unit; monitoring, by a OS controller, a communication between the function controller and the operating system (OS) controller; and in response to a communication error occurring between the OS controller and the function controller, performing by the OS controller at least one of resetting a communication channel between the controller door and the function controller, canceling a function currently being executed by the functional unit, and displaying an error message on the display of the digital controller door.

In accordance with the present invention, when an error occurs in various software or hardware of the door coupled to the cooking appliance, the operation of the cooking appliance may be controlled or canceled to increase stability of the cooking appliance.

In accordance with the present invention, the control component of the door coupled to the cooking appliance and the control component disposed in the cooking appliance may cooperate with each other to control the cooking appliance and solve the error occurring during the operation process of the cooking appliance.

The effects of the present invention are not limited to the above-described effects, and those skilled in the art may easily derive various effects of the present invention from the configuration of the present invention.

### BRIEF DESCRIPTION OF DRAWINGS

FIG. 1 is a conceptual diagram of a cooking appliance including a digital controller door according to an embodiment of the present invention.
FIG. 2 is a diagram illustrating components of a digital controller door and components of a functional unit according to an embodiment of the present invention.
FIG. 3 is a diagram illustrating categories of functions performed by an OS controller and a function controller according to an embodiment of the present invention.
FIG. 4 is a diagram showing a process for coping with an error that occurs while a function controller and an OS controller cooperate with each other according to an embodiment of the present invention.
FIG. 5 shows differentiated timing diagrams when an OS controller or a function controller performs monitoring according to an embodiment of the present invention.
FIG. 6 is a diagram showing an error response process when a function controller monitors an OS controller and an error occurs based on the monitoring result according to an embodiment of the present invention.
FIG. 7 is a diagram showing an error response process when a function controller monitors an OS controller and an error occurs based on the monitoring result according to another embodiment of the present invention.
FIG. 8 is a diagram showing an error response process when an OS controller monitors a function controller and an error occurs based on the monitoring result according to an embodiment of the present invention.
FIG. 9 is a diagram showing a process for adjusting, by a function controller, a normal state monitoring time duration or an error determination time duration according to an embodiment of the present invention.
FIG. 10 is a diagram showing a process for adjusting, by an OS controller, a normal state monitoring time duration or an error determination time duration according to an embodiment of the present invention.
FIG. 11 is a perspective view illustrating a cooking appliance according to an embodiment of the present invention.
FIG. 12 is a diagram illustrating a state in which a digital controller door is opened.
FIG. 13 is a perspective view illustrating a digital controller door of a cooking appliance according to an embodiment of the present invention.
FIG. 14 is a schematic view illustrating a position where a cooking appliance is disposed according to an embodiment of the present invention.
FIG. 15 is a diagram showing a configuration in which one controller controls a functional unit and a digital controller door according to an embodiment of the present invention.
FIG. 16 is a diagram showing a process in which a controller controls a function of a cooking appliance according to an embodiment of the present invention.

Hereinafter, embodiments of the present invention will be described in detail with reference to the drawings so that those skilled in the art to which the present invention pertains may easily implement the present invention. The present invention may be implemented in several different forms and is not limited to the embodiments described herein.

In order to clearly describe the present invention, parts irrelevant to the description are omitted, and the same reference numerals refer to the same or similar components throughout the specification. Further, some embodiments of the present invention will be described in detail with reference to the example drawings. In adding reference numerals to the components of each drawing, the same components may be denoted by the same reference numerals as much as possible even though the components are shown in different drawings. In addition, in describing the present invention, when it is determined that a detailed description of related known components or functions may obscure the gist of the present invention, the detailed description thereof may be omitted.

It will be understood that, although the terms "first", "second", "third", and so on may be used herein to describe various components, areas, layers and/or units, these components, areas, layers and/or units should not be limited by these terms. These terms are used to distinguish one component, area, layer or unit from another component, area, layer or unit. Thus, a first component, area, layer or unit as described under could be termed a second component, area, layer or unit, without departing from the scope of the present invention. It will be understood that when a first component is referred to as being "connected to", "jointed to" or "coupled to" a second component, the first component may be directly connected to or jointed to or coupled to the second component, or one or more intervening components may be present therebetween. In addition, it will also be understood that when a component is referred to as being "between" two components, it may be the only component between the two components, or one or more intervening components may also be present therebetween.

In addition, in the implementation of the present invention, the component may be subdivided for convenience of description. However, this component may be implemented in one device or module, or one component may be implemented so as to be distributed into a plurality of devices or modules.

The present invention relates to a technique for controlling a cooking appliance using a digital controller door disposed at a front surface of the cooking appliance.

According to the present invention, a door of a microwave oven disposed on an oven or a gas stove includes a LCD or OLED screen. An Android of the LCD or OLED screen and a microcomputer of the microwave oven cooperate with each other. A LCD or OLED component operates according to various operating/external environments of the microwave oven or controls a specific function of the microwave oven.

The digital controller door of the present invention may be combined with the cooking appliance to open and close the inside of the cooking appliance. An embodiment of the cooking appliance of the present invention is a microwave oven. However, embodiments of the present invention is not limited thereto. An embodiment of the cooking appliance including the digital controller door of the present invention includes each of various cooking appliances which includes a door equipped with a display such as a LCD or OLED providing various user interfaces such as a touch screen, and is capable of storing and cooking food therein. And embodiments of the present invention is not limited o a specific display panel type.

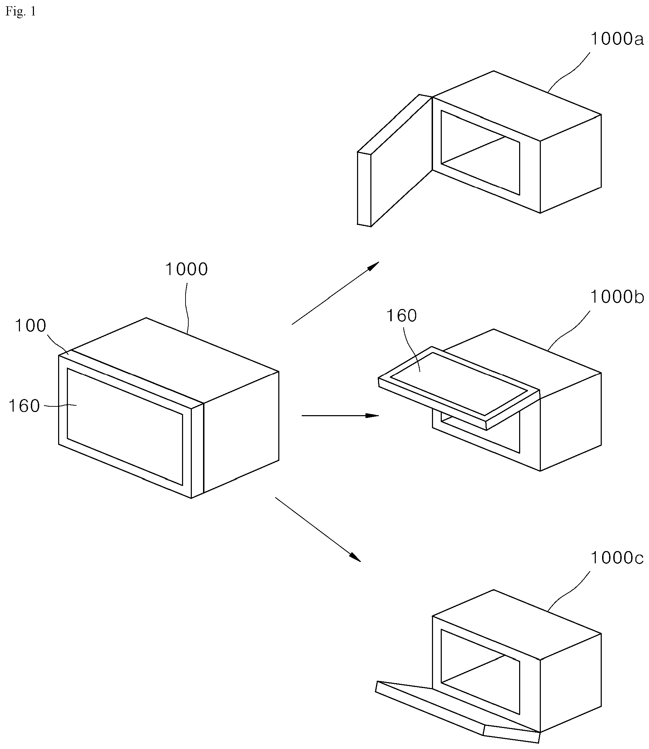

FIG. 1 is a conceptual diagram of a cooking appliance including a digital controller door according to an embodiment of the present invention.

The cooking appliance 1000 includes a digital controller door 100 at a front surface thereof. The digital controller door 100 includes one or two or more displays, and the display of the digital controller door 100 may display information about the inside of the cooking appliance 1000 or information related to an operation thereof to the user. The display of the digital controller door 100 may provide a touch input interface for receiving a predetermined command from the user.

A manner in which the digital controller door 100 is opened includes an embodiment 1000a, 1000b, or 1000c. 1000a shows an embodiment in which the digital controller door 100 pivots around a left side of the cooking appliance 1000a to open the right side of the cooking appliance 1000a, and open the inside of the cooking appliance 1000a. 1000b shows an embodiment in which the digital controller door 100 pivots around a top side of the cooking appliance 1000b to open the bottom side of the cooking appliance 1000b, and open the inside of the cooking appliance 1000b. 1000c shows an embodiment in which the digital controller door 100 pivots around a bottom side of the cooking appliance 1000c to open the top side of the cooking appliance 1000c, and open the inside of the cooking appliance 1000c.

A display 160 may be mounted on the front surface of the digital controller door 100 to provide various information to a user. The user may know the cooking state of the cooked food on the display 160. The display 160 may be embodied as a LCD. However, embodiments of the present invention is not limited thereto, and the display 160 may include various display panels. In addition, a touch panel for touch input may be coupled to the display 160.

The digital controller door 100 controls the operation of the cooking appliance 1000 and outputs various information. The cooking appliance 1000 performs cooking using microwaves or heater heat. Accordingly, a digital controlling function provided by the digital controller door 100 and a cooking function of the cooking appliance 1000 are provided in different ways and in different areas.

The digital controller door 100 of the present invention may serve as a kind of a hub. That is, the digital controller door 100 may serve as a hub of another home appliance and display information transmitted from another home appliance on the display 160. In this process, the user may obtain other information other than the cooking food on the display 160. In addition, the user may input a command necessary for cooking and various other commands to the display 160 in a touch manner.

To this end, in accordance with the present invention, a method and a configuration in which the digital controller door 100 and the cooking appliance 1000 respectively include independent control components, and these control components cooperate with each other to control the function of the cooking appliance will be described.

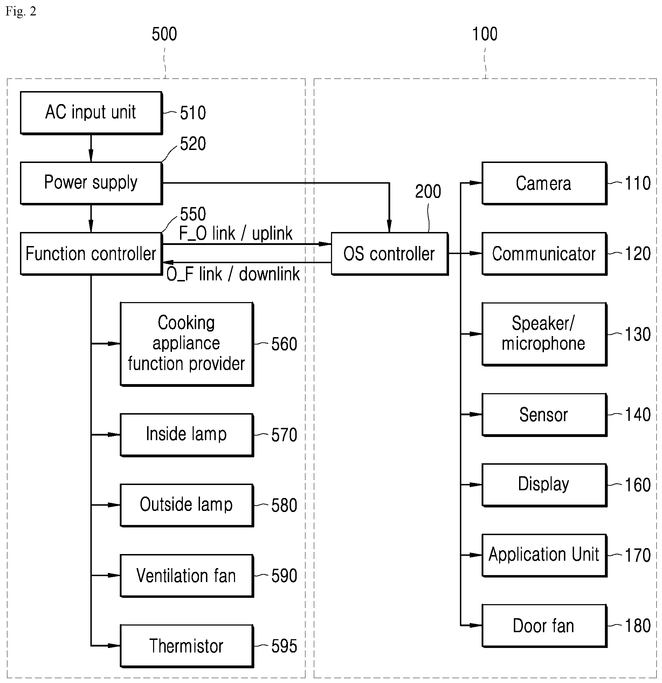

FIG. 2 is a diagram illustrating components of a digital controller door and components of a functional unit according to an embodiment of the present invention. Each of the components is conceptually disposed and is not limited to a specific physical location or material.

The digital controller door 100 may operate as an Internet-of-things hub. The digital controller door 100 may include an OS controller 200. In addition, the digital controller door 100 may include a camera 110. In addition, the digital controller door 100 may include a communicator 120. In addition, the digital controller door 100 may include a speaker/microphone 130. In addition, the digital controller door 100 may include a sensor 140. In addition, the digital controller door 100 may include the display 160. In addition, the digital controller door 100 may include an application unit 170. In addition, the digital controller door 100 may include a door fan 180. The door fan may be embodied as a direct current (DC) fan and cools the heat of the digital controller door 100. In particular, the door fan 180 cools heat generated from the display 160.

Hereinafter, the OS controller 200, the camera 110, the communicator 120, the speaker/microphone 130, the sensor 140, the display 160, the application unit 170, and the door fan 180 are referred to as elements or components of the digital controller door 100.

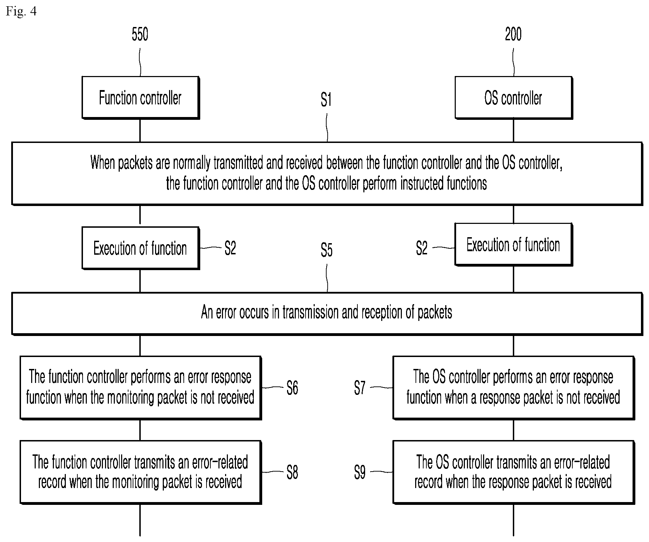

The functional unit 500 includes an AC input unit 510, a power supply 520, a function controller 550, a cooking appliance function provider 560, an inside lamp 570, an outside lamp 580, a ventilation fan (vent fan) 590, etc. The functional unit 500 and the digital controller door 100 are logically configured for the description of the present invention. The functional unit 500 may be implemented as a body 1010 illustrated in FIG. 4. Accordingly, the functional unit 500 may further include various physical components necessary for implementation as the body 1010 in addition to the components illustrated in FIG. 2.

The OS controller 200 controls various components of the digital controller door 100.

In addition, the OS controller 200 transmits a predetermined signal to the function controller 550, and allows the function controller 550 to control the performance of a specific function of the cooking appliance 1000. In addition, the function controller 550 may transmit a signal to the OS controller 200. This allows the function controller 550 to inform the OS controller 200 of a result related to the performance of a specific function of the cooking appliance 1000. The OS controller 200 may operate based on a specific OS (e.g., Android).

According to an embodiment, the function controller 550 and the OS controller 200 may operate independently and may communicate a predetermined signal with each other when there is information to be notified to each other. A type of signal may be based on various communication protocols such as wired communication or wireless communication. According to an embodiment, when the OS controller 200 receives information from the user and is instructed to perform a specific function of the cooking appliance, the OS controller 200 may transmit a specific signal to the function controller 550. In this case, the function controller 550 operates the functional unit 500, for example, the body 1010.

The function controller 550 may be embodied as a microcomputer for generating a signal for operating the functional unit 500, for example, the body 1010.

The camera 110 may be disposed on the digital controller door to photograph the outside of the cooking appliance 1000, photograph the surroundings, or photograph a cooking space inside the cooking appliance 1000.

In addition, the camera 110 may be disposed inside the digital controller door 100. The camera 110 may photograph the inside of the cooking appliance 1000 to allow the user to check the cooking state of the food stored therein.

Accordingly, the camera 110 may be disposed to face outwardly of the digital controller door 100 (toward the user) and to face inwardly of the digital controller door 100 (toward the inside of the cooking appliance). In this case, the display 160 may output an image obtained by photographing the outside out of the cooking appliance or the inside of the cooking appliance based on the cooking state or a state of the function performed by the digital controller door 100.

The communicator 120 may perform various types of wired or wireless communication functions. The communicator may communicate with another device (e.g., an external server, a hub disposed in a home, or another home appliance) using a communication protocol such as Wi-Fi, Bluetooth, or the like.

The speaker/microphone 130 may generate a voice, an alarm sound, etc. necessary for the operation of the cooking appliance 1000, and may receive a predetermined external voice command or an external sound. The speaker/microphone 130 may be integral with each other or may be disposed at different positions.

The sensor 140 senses an environment outside or inside the cooking appliance 1000. For example, the sensor 140 may include a temperature sensor, an illuminance sensor, a human sensor, a humidity sensor, etc.

The display 160 outputs visual information to be provided to a user. The information provided from the display 160 includes a cooking function or state of the cooking appliance 1000 in operation, an interface for controlling the cooking appliance 1000, and information on a surrounding environment in which the cooking appliance 1000 is disposed.

In addition, when the digital controller door 100 operates as an Internet-of-things hub, the display 160 may display various information in addition to cooking related information. In addition, the display 160 may convert a user's touch into an input signal.

The application unit 170 stores therein various application programs as executed by the digital controller door 100, and the OS controller 200 may execute the application programs stored in the application unit 170 and may display the execution results on the display 160.

The door fan 180 embodied as the direct current fan is configured to cool heat generated in various electronic devices related to a digital controller door. The door fan 180 may cool the heat generated from the display 160 or the OS controller 200.

The OS controller 200 may download various application programs through the communicator 120 and store and install the application programs in the application unit 170.

The application program according to an embodiment of the present invention includes an application program directly or indirectly related to the operation or function of the cooking appliance 1000, such as an application program for controlling the cooking of the cooking appliance 1000, an application program related to an image or a video to be displayed during the operation of the cooking appliance 1000, etc. In this case, the OS controller 200 may control a function of the cooking appliance 1000 by controlling the function controller 550 using the application program.

In addition, the application program according to an embodiment of the present invention includes an application program necessary for the digital controller door 100 to operate as the Internet of Things hub.

The AC input unit 510 constituting the functional unit 500 receives power required for the cooking appliance 1000 to operate. The supplied power is provided to the function controller 550 and the OS controller 200 through the power supply 520.

The function controller 550 controls the functions of the cooking appliance 1000. In this regard, the function controller 550 receives a signal from the OS controller 200 and controls the functions of the cooking appliance 1000. The function controller 550 may control an operation of each of the cooking appliance function provider 560, the inside lamp 570, the outside lamp 580, the ventilation fan (Vent Fan) 590, and the thermistor 595 according to the signal received from the OS controller 200. Hereinafter, the cooking appliance function provider 560, the inside lamp 570, the outside lamp 580, the ventilation fan 590, and the thermistor 595 are referred to as elements or components of the functional unit 500.

The cooking appliance function provider 560 generates microwaves or heater heat to cook food stored in the cooking appliance 1000.

The inside lamp 570 is disposed inside the cooking appliance 1000 that is opened and closed by the digital controller door 100. When the digital controller door 100 is opened or closed, the inside lamp 570 may be turned on and off. Alternatively, when the cooking appliance 1000 is cooking the food, the inside lamp 570 may be turned on so that the internal camera may capture an image thereof.

The outside lamp 580 is disposed at a lower end or an upper end of the cooking appliance 1000. When the cooking appliance 1000 is disposed on top of a separate cooktop, the outside lamp 580 may be disposed at a lower end of the cooking appliance 1000.

The ventilation fan 590 discharges heat generated from the cooktop to the outside.

The thermistor 595 is a component disposed in the functional unit 500 to sense a temperature. One or more thermistors 595 may be disposed at the cooking appliance 1000.

According to an embodiment of the present invention, the thermistor 595 may provide information on the sensed temperature to the function controller 550. According to another embodiment of the present invention, the thermistor 595 may be included in the sensor 140, and in this case, information on the sensed temperature may be provided to the OS controller 200 that controls the sensor 140.

The food stored in the cooking appliance 1000 is cooked via the operation of the cooking appliance function provider 560. Even in this process, the function controller 550 and the OS controller 200 may communicate information with each other per a preset time interval.

The OS controller 200 provides a UI/UX function. In addition, the OS controller 200 transmits a predetermined signal to the function controller 550, and the function controller 550 controls the operation of the cooking appliance 1000, for example, the body 1010 or the functional unit 500. In addition, the function controller 550 may control an operation of the cooking appliance function provider 560 and provide an information value generated therefrom during control to the OS controller 200.

Accordingly, the control flow of the OS controller 200 and the function controller 550 is configured such that the OS controller 200 transmits a predetermined signal to the function controller 550 and then receives a predetermined control result from the function controller 550.

The OS controller 200 and the function controller 550 may communicate with each other in a wired or wireless manner. The OS controller 200 and the function controller 550 may communicate with each other using various communication protocols, and embodiments of the present invention are not limited to a specific communication protocol.

As illustrated in FIG. 2, a communication link via which the function controller 550 transmits predetermined data to the OS controller 200 or performs control is referred to as a F_O link or an uplink. A communication link via which the OS controller 200 transmits predetermined data to the function controller 550 or performs control is referred to as an O_F link or a downlink. However, embodiments of the present invention are not limited to a specific name or a direction such as upward/downward, and the links may be distinguished from each other based on a direction of data transmission between the components 550 and 200.

In an embodiment of the present invention, the link may physically use one or more lines or may use one or more communication media. In addition, in accordance with the present invention, a name is separately given to each data transmission direction in order to distinguish logically the data transmission directions from each other.

According to an embodiment of the present invention, in the case of the wired communication, the OS controller 200 and the function controller 550 may communicate with each other using a communication protocol such as Universal asynchronous receiver/transmitter (UART) and Universal Serial Bus (USB).

According to an embodiment of the present invention, in the case of the wireless communication, the OS controller 200 and the function controller 550 may communicate with each other using a communication protocol such as Zigbee, Wi-Fi, and Bluetooth.

Each of the OS controller 200 and the function controller 550 may include a separate memory (internal memory), and may store, in the memory, function result information or error information generated in the process of performing a function.

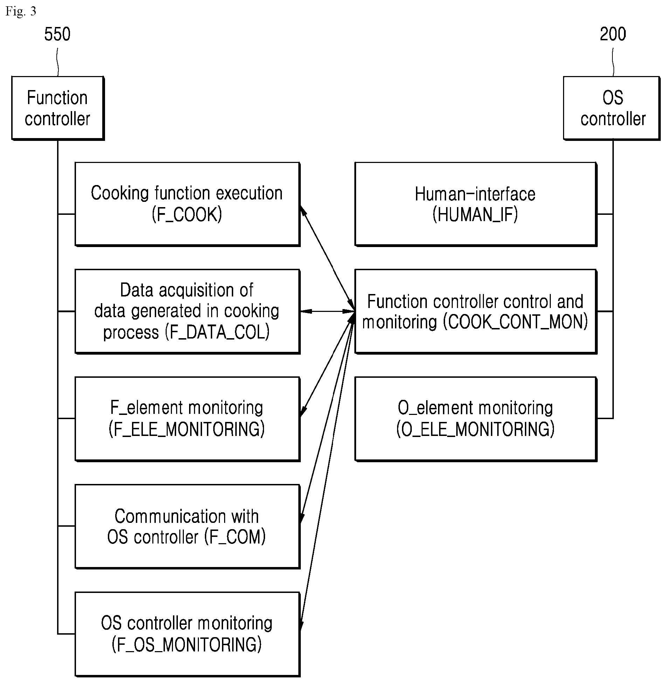

FIG. 3 is a diagram illustrating categories of functions performed by an OS controller and a function controller according to an embodiment of the present invention. Each function includes a case in which each of the controllers 200 and 550 performs a corresponding function.

Each of the controllers 200 and 550 may perform the functions simultaneously or sequentially.

The function controller 550 controls the functional unit 500 that provides a cooking function. The operating system (OS) controller 200 transmits a signal to the function controller 550. The function controller 550 instructs an operation of the functional unit 500. The operating system (OS) controller 200 controls the digital controller door 100 that preferably provides a human interface.

The functions performed by the function controller 550 include cooking function execution F_COOK. In addition, the functions performed by the function controller 550 include data acquisition F_DATA_COL of data generated in the cooking process. In addition, functions performed by the function controller 550 include F_element monitoring F_ELE_MONITORING. In addition, functions performed by the function controller 550 include communication F_COM with the OS controller 200. In addition, functions performed by the function controller 550 include OS controller monitoring F_OS_MONITORING. The OS controller 200 and the function controller 550 may operate independently, and may inform the state or operation status of each component via transmission and reception of signals to and from each other.

In the cooking function execution F_COOK, the function controller 550 controls the cooking appliance function provider 560 so that the cooking appliance 1000 may perform cooking. Alternatively, in addition to cooking such as heating, a function in which the function controller 550 controls the operation of the inside lamp 570, the outside lamp 580, and the ventilation fan 590 may be included in the cooking function execution F_COOK.

The function of the data acquisition F_DATA_COL of the data generated in the cooking process is a function of the function controller 550 collecting or acquiring various result values calculated by the elements or the components of the functional unit 500 or data related to the current state in the cooking function execution F_COOK process.

The F_element monitoring F_ELE_MONITORING refers to a function in which the function controller 550 monitors elements or components of the functional unit 500. The function controller 550 may monitor whether each element or component operates properly or whether each element or component operates according to a previous instruction to perform a function.

The communication F_COM function with the OS controller means that the function controller 550 provides data obtained in F_DATA_COL, F_ELE_MONITORING, etc. to the OS controller 200.

The OS controller monitoring F_OS_MONITORING function refers to a function in which the function controller 550 transmits a predetermined packet to the OS controller 200 to check whether the OS controller 200 is operating properly.

The F_COM and F_OS_MONITORING functions may be implemented as one function. That is, even when the cooking function is not performed, the function controller 550 transmits the data obtained through the F_ELE_MONITORING to the OS controller 200. The function controller 550 may check whether the OS controller 200 is in a normal state or an abnormal state based on whether the OS controller 200 has transmitted an acknowledgement (ACK) response to the transmitted data.

The functions performed by the OS controller 200 include a human-interface HUMAN_IF. In addition, the functions performed by the OS controller 200 include function controller control and monitoring COOK_CONT_MON. In addition, the functions performed by the OS controller 200 include O_element monitoring O_ELE _MONITORING. In this regard, one embodiment of the function controller control and monitoring COOK_CONT_MON is that the OS controller 200 transmits a predetermined signal to the function controller 550 so that the function controller 550 may control the functional unit 500, that is, the body 1010.

The human-interface HUMAN_IF function refers to a function in which the OS controller 200 outputs a user interface, such as various information or a menu necessary for controlling the cooking appliance, and receives a user's touch input thereto.

One embodiment of the function controller control and monitoring COOK_CONT_MON is that the OS controller 200 provides a signal to the function controller 550 so that the function controller 550 controls the operation of the functional unit 500, that is, the body 110. In addition, one embodiment of the function controller control and monitoring COOK_CONT_MON is that predetermined information collected by the function controller 550, for example, information necessary for monitoring the state or an operation status of the functional unit 500, that is, the body 110, is transmitted to the OS controller 200 in a form of a predetermined wired or wireless signal.

More specifically, when the user selects a specific cooking function in the human-interface HUMAN_IF function, the OS controller 200 may instruct the function controller 550 to execute the cooking function. In addition, the OS controller 200 may perform monitoring to receive values of the operation states or cooking results of the elements or the components constituting the functional unit 500 from the function controller 550. All of these functions are included in the function controller control and monitoring COOK_CONT_MON. Accordingly, the function controller control and monitoring COOK_CONT_MON of the OS controller 200 is related to five functions of the function controller 550.

The O_element monitoring O_ELE_MONITORING refers to a function in which the OS controller 200 monitors the elements or the components of the digital controller door 100. The OS controller 200 may monitor whether each of the elements or the components operates properly, or whether each element or component operates according to a previous instruction to perform a function.

As shown in FIG. 3, the function controller 550 and the OS controller 200 perform respective given functions independently but in association with each other. Accordingly, the function controller 550 checks whether the OS controller 200 operates normally or not in the process of performing the function, while the OS controller 200 checks whether the function controller 550 operates normally or not in the process of performing the function. When an abnormality occurs in an component of one of the function controller 550 and the OS controller 200, the other of the function controller 550 and the OS controller 200 may cope with this situation.

FIG. 4 is a diagram showing a process for coping with an error that occurs while the function controller and the OS controller cooperate each other according to one embodiment of the present invention.

The function controller 550 controls the functional unit (i.e., function unit) 500 that provides the cooking function. The OS (Operating System) controller 200 instructs the operation of the functional unit 500 and controls the digital controller door 100 that provides the human interface.

When packets are normally transmitted and received between the function controller and the OS controller, the function controller 550 and the OS controller 200 perform the function instructed according to the menu selected by the person through the digital controller door 100 in S1.

That is, the function controller 550 may perform one or more of the functions presented in FIG. 3 in S2. Similarly, the OS controller 200 may perform one or more of the functions presented in FIG. 3 in S3.

In this process, an error may occur in the transmission and reception of the packets (such as a monitoring packet, a response packet, or a packet containing an instruction message) transmitted and received between the function controller 550 and the OS controller 200 in S5. That is, when a communication packet is not transmitted therebetween or an error occurs during the reception process, the function controller 550 and the OS controller 200 check the occurrence of an error and perform an error response function accordingly.

More specifically, the function controller 550 may perform an error response function when the monitoring packet is not received by the function controller in S6. In this process, the function controller 550 may restrict the function of the functional unit 500 or cancel the function thereof in operation. Moreover, the function controller 550 may reset the OS controller 200.

The OS controller 200 may perform an error response function when a response packet is not received thereby in S7. In this process, the OS controller 200 may restrict the function of the digital controller door 100 or cancel the function thereof in operation. Moreover, the OS controller 200 may reset the communication channel over which the OS controller performs communication with the function controller 550 or output the error status as a message on the display 160.

Afterwards, in response to that packets are normally transmitted and received again between the function controller 550 and the OS controller 200, the function controller 550 and the OS controller 200 transmit an error-related record to each other at S8 and S9.

That is, each of the function controller 550 and the OS controller 200 may store, in an internal memory thereof, a record during the period during which the communication packets are not transmitted and received therebetween. Then, when the communication packets start to be transmitted and received therebetween, the function controller 550 and the OS controller 200 transmit the records respectively stored in their internal memories to each other to notify that the error has occurred.

According to one embodiment of the present invention, the function controller 550 may record information about a time duration for which a state which the communication with the OS controller 200 was not possible has lasted, a canceled function, a time point of cancellation, the number of times the function controller reset the OS controller 200, etc., and then transmit the recorded information to the OS controller 200 at S8.

According to one embodiment of the present invention, the OS controller 200 may provide the function controller 550 with information about a time duration for which a state in which the OS controller cannot communicate with the function controller 550 has lasted, information about the cooking course (menu) instructed by the user, etc.

Moreover, the OS controller 200 may transmit the record obtained in the S8 and S9 process to an external server. Alternatively, the OS controller 200 may transmit the record obtained in the S8 and S9 process to a portable device (for example, a user device) linked to the cooking appliance.

S6 and S8 are functions included in the OS controller monitoring F_OS_MONITORING of the function controller 550. S7 and S9 are functions included in the function controller control and monitoring COOK_CONT_MON of the OS controller 200.

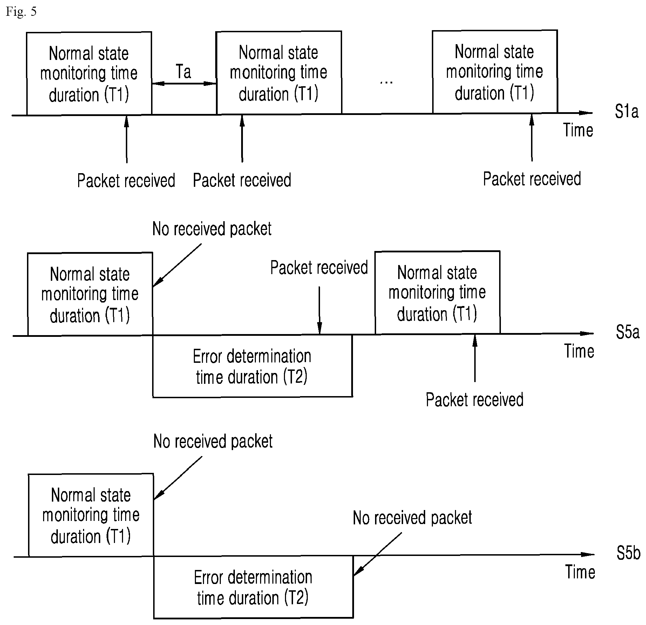

FIG. 5 shows differentiated timing diagrams when the OS controller or the function controller performs monitoring according to one embodiment of the present invention.

The OS controller 200 or the function controller 550 checks whether a packet is normally received during a normal state monitoring time duration T1.

In response to that a packet is normally received during the T1, as in S1a of FIG. 5, the OS controller 200 or the function controller 550 repeatedly checks the packet reception during the normal state monitoring time duration T1, periodically or according to a preset schedule.

On the other hand, in response to that there is no packet reception during the normal state monitoring time duration T1, as in S5a of FIG. 5, the OS controller 200 or the function controller 550 checks packet reception again or performs a task of retransmitting a packet which the OS controller 200 or the function controller 550 has previously transmitted, during an error determination time duration T2. In addition, the OS controller 200 or the function controller 550 may reset the communication channel during this process.

In response to that a packet is received during the error determination time duration T2, the OS controller 200 or the function controller 550 performs the process of S8 and S9 described above. Thereafter, the OS controller 200 or the function controller 550 repeatedly checks packet reception during the normal state monitoring time duration T1 periodically or according to a preset schedule.

Otherwise, in response to that there is no packet reception during the error determination time duration T2 as in S5b of FIG. 5, the OS controller 200 or the function controller 550 may perform a preset error-solving function. The OS controller 200 may display a message on the display 160 indicating that the functional unit cannot be operated. The function controller 550 may cancel the cooking function if the food is being cooked.

The preset error-solving function may be performed during the error determination time duration T2 or may be performed after the error determination time duration T2 has elapsed. In addition, in response to that there are multiple preset error-solving functions, some thereof may be performed during the error determination time duration T2 and the others thereof may be performed after the error determination time duration T2 has elapsed.

That is, the function controller 550 or the OS controller 200 may check the reception status of the packet during the normal state monitoring time duration T1, and then, in response to that the packet is not received during the normal state monitoring time duration T1, the function controller 550 or the OS controller 200 may perform a function to re-check the reception status of the packet or resolve the error during the error determination time duration T2.

In this regard, each of the normal state monitoring time duration T1 and the error determination time duration T2 may be fixed or variable. For example, the function controller 550 or the OS controller 200 may increase or decrease each of the normal state monitoring time duration T1 and the error determination time duration T2 based on the currently in progress function, the past error occurrence history, or the age of the cooking appliance (or the time duration for which it has been in operation).

In addition, an interval Ta between the normal state monitoring time durations T1 may also be increased or decreased. For example, the function controller 550 or the OS controller 200 may increase or decrease the interval Ta between the normal state monitoring time durations T1 depending on the function currently in progress, or on the past error occurrence history, or on an age of the cooking appliance (or the time duration for which it has been in operation), etc.

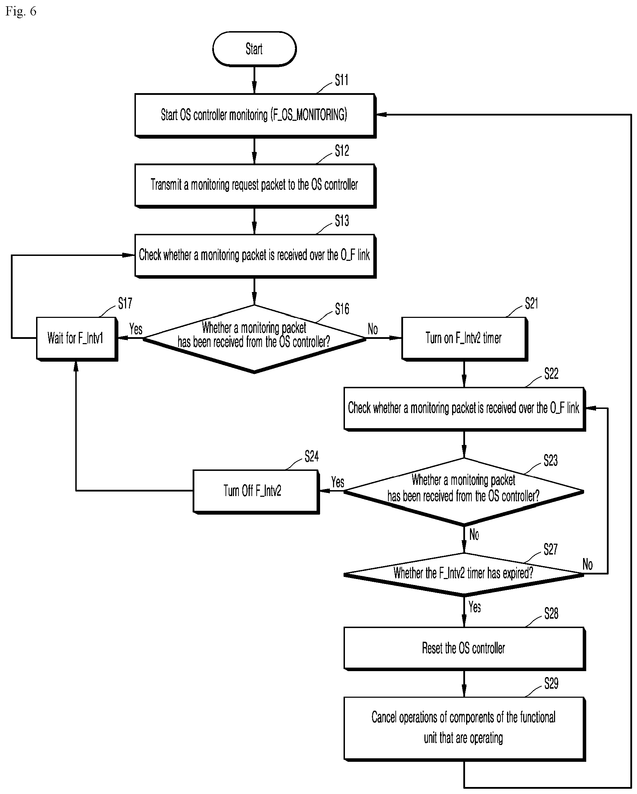

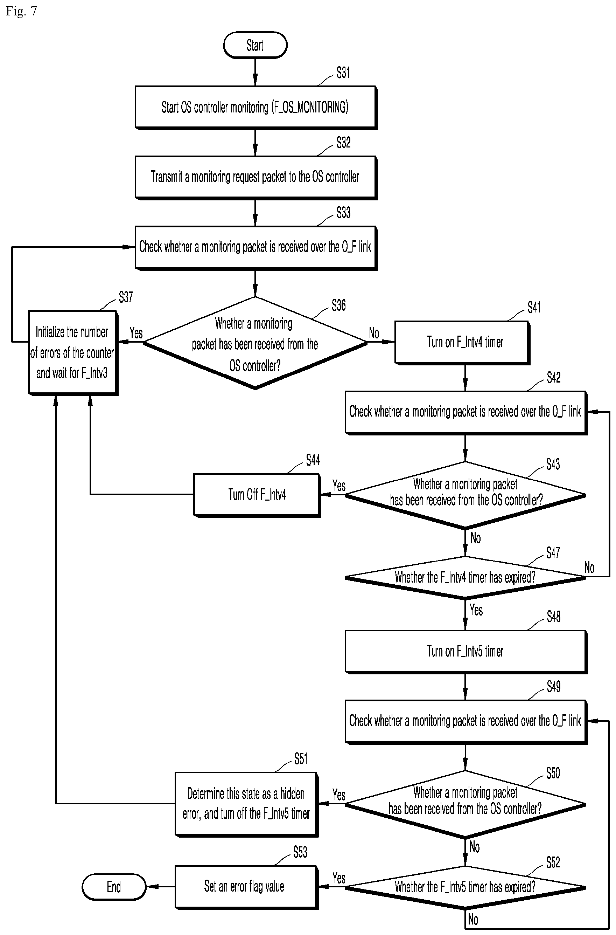

Hereinafter, the operation of the function controller 550 according to one embodiment of the present invention when the function controller 550 does not receive a monitoring packet from the OS controller 200 during the normal state monitoring time duration will be examined. The function controller 550 performs a task of checking whether a monitoring packet has been received from the OS controller 200 during the error determination time duration. This may refer to FIG. 6 and FIG. 7.

FIG. 6 is a diagram showing an error response process when a function controller monitors an OS controller and an error occurs based on the monitoring result according to an embodiment of the present invention.

According to one embodiment of the present invention, when the function controller 550 does not receive a monitoring packet from the OS controller 200 during the normal state monitoring time duration, the function controller 550 performs a task of checking whether a monitoring packet has been received from the OS controller 200 during the error determination time duration.

The function controller 550 starts the OS controller monitoring F_OS_MONITORING in S11. The function controller 550 may perform the OS controller monitoring F_OS_MONITORING while performing other functions F_COOK, F_DATA_COL, F_ELE_MONITORING, and F_COM of the function controller 550, as shown in FIG. 3. Alternatively, the function controller 550 may perform the OS controller monitoring F_OS_MONITORING alone.

The function controller 550 transmits a monitoring request packet to the OS controller 200 in S12. Then, the function controller 550 checks whether a monitoring packet is received from the OS controller 200 over the O_F link (downlink) over which data is transmitted or the control is instructed, during the normal state monitoring time duration T1 in S13. The monitoring packet may include the control packet transmitted by the OS controller 200.That is to say, the monitoring packet does not refer to a specific packet alone, but includes packets transmitted by the OS controller 200 for monitoring, packets transmitted for control, etc.

In response to that the function controller 550 receives the monitoring packet from the OS controller 200 (S16-Yes), the function controller 550 determines that the OS controller 200 is in normal operation. Thus, the function controller 550 waits for a preset monitoring interval F_Intv1 in S17 and then proceeds to S13 again. Alternatively, the function controller 550 may proceed to operation S12. This corresponds to a case where the function controller 550 transmits the monitoring request packet every time.

The F_Intv1 as the monitoring time interval in OS controller monitoring F_OS_MONITORING (corresponding to Ta in the embodiment in FIG. 5) refers to a time interval for which the OS controller 200 transmits the monitoring packet to the function controller 550. This time interval is a time duration pre-arranged on between the function controller 550 and the OS controller 200. According to one embodiment of the present invention, the F_Intv1 may be preset and fixed.

Alternatively, according to another embodiment of the present invention, F_Intv1 may be increased or decreased.

For example, in response to that the function controller 550 needs to perform monitoring of the OS controller 200 at a short time interval, the function controller 550 and the OS controller 200 may decrease F_Intv1.

Moreover, the function controller 550 may increase or decrease F_Intv1 depending on the cooking function or specific function performed by the function controller 550. When F_Intv1 is increased or decreased, the function controller 550 and the OS controller 200 may share an increased or decreased value of the F_Intv1 with each other.

On the other hand, in response to that the function controller 550 does not receive the monitoring packet from the OS controller 200 (S16-No), the function controller 550 enters the error determination time duration T2.

The function controller 550 turns on a timer corresponding to the F_Intv2 time duration (corresponding to the embodiment of T2 in FIG. 5) in S21. In this way, the F_Intv2 timer is turned on. Then, in response to that the monitoring packet is not yet received from the OS controller 200, after the F_Intv2 time duration has elapsed, the function controller 550 may perform tasks S28 and S29 to resolve the error of the OS controller 200

After S21, the function controller 550 checks whether the monitoring packet has been received from the OS controller 200 over the O_F link (downlink) over which data is transmitted or the control is instructed in S22. In response to that the function controller 550 has received the monitoring packet from the OS controller 200 (S23-Yes), the function controller 550 determines that the OS controller 200 is in a normal operating state, and thus the function controller 550 turns off the F_Intv2 timer in S24 and proceeds to S17.

On the other hand, in response to that the function controller 550 does not receive the monitoring packet from the OS controller 200 (S23-No), the function controller 550 checks whether the F_Intv2 timer has expired in S27. In response to that the F_Intv2 timer has not expired (S27-No), the function controller 550 proceeds to operation S22 to check whether the monitoring packet has been transmitted from the OS controller 200 until the F_Intv2 timer expires.

In response to that the F_Intv2 timer has expired (S27-Yes), the function controller 550 determines that the OS controller 200 is not in a normal operating state. Thus, the function controller 550 resets the OS controller 200 in S28 and cancels the operations of the components 560, 570, 580, and 590 of the functional unit 500 that are operating in S29.

The embodiment of FIG. 6 may be applied to an embodiment in which the cooking appliance 1000 is a microwave oven, the function controller 550 is a microcomputer that controls the microwave oven, and the OS controller 200 is an Android OS (Android).

In this regard, the OS controller 200 may be implemented to transmit a monitoring packet to the function controller 550 or to transmit an ACK packet (response packet), etc. at a predefined time interval. In response to that the function controller 550 does not receive a monitoring packet from the OS controller 200 for 60 seconds (F_Intv2) or fails to communicate with the OS controller 200, the function controller 550 may reset the OS controller 200 (for example, the Android board), and cancel the cooking currently being performed by the microwave oven.

In the cancellation process, the function controller 550 may cancel the operations of the components (elements) of the functional unit 500, such as the cooking appliance function provider 560, the inside lamp 570 as an example of an oven lamp, the outside lamp 580 as an example of a cooktop lamp, and the ventilation fan 590. In this process, in response to that the ventilation fan 590 is performing an auto ventilation operation, the function controller 550 may not cancel the operation of the ventilation fan 590.

The function controller 550 embodied as a microcomputer may reset the Android board as the OS controller 200, in response to that the function controller does not receive a signal from the OS controller 200 for a preset period of time, such as 60 seconds or 30 seconds. This is a function performed only in an emergency situation. In addition, the function controller 550 cannot reset the OS controller 200 in a normal operation situation.

That is, in response to that the function controller 550 does not receive a monitoring packet from the OS controller 200 during the error determination time duration, the function controller 550 may reset the OS controller 200 in S28 and store a record of the OS controller reset in the internal memory thereof.

Furthermore, in response to that the function controller 550 does not receive a monitoring packet from the OS controller 200 during the error determination time duration, the function controller 550 may cancel the operation of each of the components (i.e., elements) of the functional unit 500 and store a record of the operation cancellation in the internal memory.

That is, in the S29 process, the function controller 550 may cancel the operations of all components (elements) of the functional unit 500. Alternatively, the function controller 550 may cancel the operations of some of the components (elements) of the functional unit 500.

For example, in response to that the ventilation fan 590 among the components (elements) of the functional unit 500 is performing the auto ventilation function, the function controller 550 may maintain the operation of the ventilation fan 590 for a preset time duration. For example, in response to that the thermistor 595 has detected external heat, the auto ventilation function may be performed. In this case, the function controller 550 may maintain the operation of the ventilation fan 590. In this regard, the function controller 550 may continuously check the heat detected by the thermistor 595, and then may control the operation of the ventilation fan 590 based on the checking result.

In addition, in response to that the inside lamp 570 or the outside lamp 580 among the components (elements) of the functional unit 500, which are necessary for the user to recognize the cooking appliance 1000, is turned on, the function controller 550 may maintain the inside lamp 570 or the outside lamp 580 in the turned on state for a preset time duration, such as 1 minute or 3 minutes.

In response to that the function performed by the cooking appliance function provider 560 of the functional unit 500 is terminated within a preset time duration, for example, 5 seconds or 3 seconds, the function controller 550 may terminate the operation of the cooking appliance function provider 560 after the cooking appliance function provider 560 has finished the operation.

In this process, in response to that the thermistor 595 detects the internal heat and it is determined that the detected heat is at a high temperature higher than a predefined reference temperature, the function controller 550 may immediately terminate the operation of the cooking appliance function provider 560.

In summary, in the process S29, when the function controller 550 cancels the operation of each of the components (elements) of the functional unit 500 that are in operation, the function controller 550 may cancel the operation of each of the components of the functional unit 500 based on the operation status of each element / component or the external environment.

The embodiment of FIG. 6 may be applied to both a situation where the cooking appliance performs a specific cooking function and a situation where the cooking appliance does not perform the specific cooking function.

In the case where the cooking appliance does not perform the operation such as heating or cooking, the embodiment of FIG. 6 may be applied. In this regard, the monitoring on the OS controller may be performed as in FIG. 7.

FIG. 7 is a diagram showing an error response process when a function controller monitors an OS controller and an error occurs based on the monitoring result according to another embodiment of the present invention. In response to that the cooking appliance does not perform cooking or the elements, i.e., the components of the functional unit 500 do not operate, the function controller 550 does not need to immediately check the operating status of the OS controller 200. Therefore, the function controller 550 may perform the OS controller monitoring F_OS_MONITORING in a different manner than the manner in FIG. 6.

The function controller 550 starts the OS controller monitoring F_OS_MONITORING S31. At this time, the components or the elements of the functional unit 500 are not performing separate operations. In addition, the function controller 550 may not perform other functions F_COOK, F_DATA_COL, F_ELE_MONITORING, and F_COM of the function controller 550 as presented in FIG. 3. Alternatively, the function controller 550 may perform the F_element monitoring F_ELE_MONITORING. Alternatively, the function controller 550 may perform only the OS controller monitoring F_OS_MONITORING.

The function controller 550 transmits a monitoring request packet to the OS controller 200 in S32. Then, the function controller 550 checks whether a monitoring packet is received from the OS controller 200 over the O_F link (downlink) over which data is transmitted or the control is instructed during the normal state monitoring time duration T1 in S33.

In response to that the function controller 550 receives a monitoring packet from the OS controller 200 (S36-Yes), the function controller 550 determines that the OS controller 200 is in a normal operation state Thus, the function controller 550 waits for a preset monitoring interval F_Intv3 in S37 and then proceeds to S33. In this regard, in response to that the number of error occurrences was counted before S32, it is determined that the monitoring packet is normally received at S36. Thus, the function controller 550 may perform the task of initializing the number of errors of the counter at S37.

In this regard, the F_Intv3 as the monitoring time interval in the OS controller monitoring F_OS_MONITORING refers to a time interval for which the OS controller 200 transmits the monitoring packet to the function controller 550. This time interval is a time duration as pre-arranged upon between the function controller 550 and the OS controller 200. According to one embodiment of the present invention, this time duration may be preset and fixed.

Alternatively, according to another embodiment of the present invention, this time duration may be increased or decreased.

For example, in response to that the function controller 550 needs to perform monitoring on the OS controller 200 at a long time interval, the function controller 550 and the OS controller 200 may increase the F_Intv3.

Moreover, in response to that the function controller 550 does not perform the cooking, etc. for a long time duration, the F_Intv3 may be increased. In response to that the F_Intv3 is increased or decreased, the function controller 550 and the OS controller 200 may share the increased or decreased value of the F_Intv3 with each other.

On the other hand, in response to that the function controller 550 does not receive a monitoring packet from the OS controller 200 (S36-No), the function controller 550 turns on the timer corresponding to the F_Intv4 time duration in S41. That is, the function controller 550 enters the error determination time duration T2. In this way, the F_Intv4 timer is turned on. In response to that the monitoring packet is not yet received from the OS controller 200, after the F_Intv4 time duration, for example, 30 seconds, has elapsed, the function controller 550 may perform a task to respond to the error of the OS controller 200

After S41, the function controller 550 checks whether a monitoring packet is received from the OS controller 200 over the O_F link (downlink) over which data is transmitted or the control is instructed in S42. In response to that the function controller 550 receives a monitoring packet from the OS controller 200 (S43-Yes), the function controller determines that the OS controller 200 is in a normal operating state. Thus, the function controller 550 turns off the F_Intv4 timer in S44 and then proceeds to S37. At this time, the function controller 550 terminates the error determination time duration T2.

On the other hand, in response to that the function controller 550 does not receive a monitoring packet from the OS controller 200 (S43-No), the function controller 550 checks whether the F_Intv4 timer has expired in S47. In response to that the F_Intv4 timer has not expired (S47-No), the function controller 550 proceeds to operation S42 in which the function controller is configured to check whether a monitoring packet has been transmitted from the OS controller 200 until the F_Intv4 timer has expired.

In response to that F_Intv4 timer has expired (S47-Yes), it is determined that the OS controller 200 is not in a normal operation. Thus, the function controller 550 turns on a F_Intv5 timer in S48. The F_Intv5 (for example, 3 hours) timer is a timer set for coping with the error. The F_Intv5 is a longer time duration than the F_Intv4.

Upon turning on the F_Intv5 timer, the function controller 550 checks whether a monitoring packet is received over the O_F link (downlink) in S49. In response to that the function controller 550 receives a monitoring packet from the OS controller 200 (S50-Yes), the function controller 550 determines this state as a hidden error, and turns off the F_Intv5 timer in S51 and then proceeds to S37. At this time, function controller 550 ends the error determination time duration T2.

On the other hand, in response to that the function controller 550 does not receive a monitoring packet from the OS controller 200 (S50-No), the function controller 550 checks whether the F_Intv5 timer has expired in S52. In response to that the F_Intv5 timer has not expired (S52-No), the function controller 550 proceeds to operation S49 in which the function controller 550 checks whether a monitoring packet has been transmitted from the OS controller 200 until the F_Intv5 timer has expired.

In response to that the F_Intv5 timer has expired (S52-Yes), the function controller 550 determines that the OS controller 200 is not operating normally. Thus, the function controller 550 sets an error flag value in the internal memory or a storage space or a flag in S53.

This is a situation where the OS controller 200 is not operating normally. Thus, when the OS controller 200 is reset or restarted later, the OS controller 200 checks this error flag value so that it may check whether an error has occurred. In this regard, at operation S53, the function controller 550 ends the error determination time duration T2 as described in S5b of FIG. 5. However, the timing does not enter the normal state monitoring time duration T1.

The embodiment of FIG. 7 may be applied to an embodiment in which the cooking appliance 1000 is a microwave oven, the function controller 550 is a microcomputer that controls the microwave oven, and the OS controller 200 is an Android OS (Android).

Each of the intervals of FIG. 6 and FIG. 7 may be adjusted based on the operation status or function status of the functional unit 500. This will be described later.

Next, a process in which the OS controller 200 monitors the function controller 550 will be described.

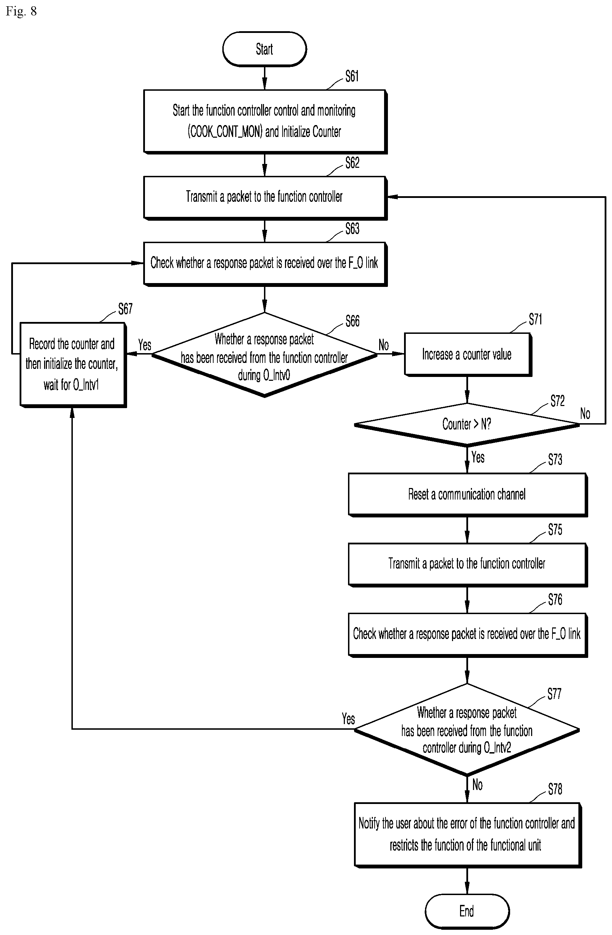

FIG. 8 is a diagram showing an error response process when an OS controller monitors a function controller and an error occurs based on the monitoring result according to an embodiment of the present invention.

A process S62, S63, S66, and S67 correspond to the normal state monitoring time duration T1 as identified in FIG. 5. A process S71 to S78 correspond to the error determination time duration T2 as identified in FIG. 5.

The OS controller 200 transmits a monitoring packet to the function controller 550. Thereafter, in response to that the OS controller 200 does not receive a response packet from the function controller 550 during the normal state monitoring time duration, the OS controller 200 may check whether a response packet has been received from the function controller 550 during the error determination time duration, and determine whether there is an error based on the checking result, and take a follow-up action accordingly.

The OS controller 200 starts the function controller control and monitoring COOK_CONT_MON in S61. In S61, the OS controller 200 initializes a counter. Then, the number of packet reception errors is counted, and the OS controller 200 responds to a situation in which the number of the errors exceeds a predefined value. For example, the counter initialization means setting the counter to 0.

The OS controller 200 may perform the function controller control and monitoring COOK_CONT_MON while performing the human-interface HUMAN_IF or the O_element monitoring O_ELE_MONITORING as presented in FIG. 3.

Moreover, the OS controller 200 may start the function controller control and monitoring COOK_CONT_MON according to its own schedule or upon determination that it is required, or may start the function controller control and monitoring COOK_CONT_MON according to the request of the function controller 550 as identified in FIG. 6 or FIG. 7.

The OS controller 200 transmits a packet to the function controller 550 in S62. The packet may include an indication that instructs the function controller 550 to perform a predefined function or to transmit a predefined response from the function controller 550 thereto. The packet of S62 may be transmitted through the O_F link, and the OS controller 200 checks whether the packet (response packet) has been received over the F_O link in S63.

In this regard, the packet may be a packet transmitted for monitoring or controlling and may correspond to the monitoring packet of FIG. 6 or FIG. 7. Alternatively, the packet may be a differentiated packet from the monitoring packet of FIG. 6 or FIG. 7.

In response to that a response packet is received from the function controller 550 based on a result of checking whether the packet is received during the time duration of O_Intv0 (S66-Yes), it is determined that the function controller 550 is in a normal operating state. Thus, the OS controller 200 waits for a preset monitoring interval O_Intv1 (an example of Ta in FIG. 5) in S67 and then proceeds to operation S62 again. In the S67 process, in response to that the counter value is 1 or greater, the OS controller 200 may determine that an error occurs in the reception of the response packet and record the error occurrence and then initialize the counter.

In this regard, the O_Intv0 may be included in one embodiment of the normal state monitoring, and may be counted after the packet transmission of S62, and the O_Intv0 may be preset. Alternatively, the OS controller 200 may reset or increase or decrease the O_Intv0 depending on the operating state of the cooking appliance 1000 or the function being performed. One example of the O_Intv0 is 300ms. However, the present invention is not limited thereto.

In one embodiment, the O_Intv0 may be 300ms. In this case, the OS controller 200 may check whether a response packet is received over the F_O link for 300ms after the packet transmission of S62. In response to that a response packet is not received for a time duration longer than the O_Intv0, the OS controller 200 may proceed to operation S71.

The O_Intv1 as the monitoring time interval in the function controller controlling and monitoring COOK_CONT_MON may be included in one embodiment of the normal state monitoring, and refers to a time interval during which the OS controller 200 transmits a packet to monitor the function controller 550. This time interval may be a time duration pre-agreed upon between the function controller 550 and the OS controller 200. According to one embodiment of the present invention, this time duration may be preset and fixed.

In this regard, the O_Intv1 and the F_Intv1 of FIG. 6 and the F_Intv3 of FIG. 7 may be set to be identical with each other or be different from each other.

According to one embodiment of the present invention, the O_Intv1 may be preset and fixed.

Alternatively, according to another embodiment of the present invention, the O_Intv1 may be increased or decreased.

For example, in a situation where it is necessary for the OS controller 200 to perform monitoring on the function controller 550 at a short time interval, each of the OS controller 200 and the function controller 550 may decrease the O_Intv1.

Furthermore, in response to that the function controller 550 does not perform the cooking, etc. for a long time duration, the O_Intv1 may be increased.

That is, the OS controller 200 may increase or decrease the O_Intv1 depending on the cooking function or specific function performed by the function controller 550. In response to that the O_Intv1 is increased or decreased, the OS controller 200 and the function controller 550 may share the increased or decreased value of the O_Intv1 with each other.

When the OS controller 200 does not receive a response packet from the function controller 550 for the O_Intv0 (S66-No), this means that the response to the packet transmitted over the downlink O_F link has not been received for the O_Intv0, for example, 300ms.

Therefore, the OS controller 200 requests re-transmission of the response packet to the function controller 550 a total of N times (for example, 3 times). As discussed above, the number of re-transmissions may also increase or decrease depending on the cooking status of the functional unit 500, a remaining cooking time duration, the past error occurrence situation, etc. The number of re-transmissions is included in one embodiment of the error determination time duration.

The OS controller 200 increases the counter in S71 and checks whether the counter value exceeds a specific number of times N in S72. In response to that the counter value does not exceed the specific number of times N, the OS controller 200 retransmits the packet to the function controller 550 in S62. While the OS controller 200 repeats the S62 to S72 process, the OS controller 200 may check whether a response packet has been received from the function controller 550.

In response to that a response packet has not been received from the function controller 550 after the re-transmission N times or greater, that is, in response to that the counter value in S72 exceeds N (for example, 3), the OS controller 200 determines that there is a communication error therebetween and resets the communication channel in S73.

For example, in response to that the communication protocol is UART, the OS controller 200 resets (initializes) the UART port. The reset scheme includes a scheme of closing/opening the UART port. As a result, the OS controller 200 resumes communication with the function controller 550.

In this regard, a time duration for which the number of re-transmissions reaches the specific number of times N may be included in one embodiment of the error determination time duration. The OS controller 200 may reset the communication channel for transmitting and receiving packets with the function controller 550 in response to that no response packet is received from the function controller 550 during the error determination time duration.

Thereafter, the OS controller 200 transmits the packet to the function controller 550 again in S75. Then, the OS controller is configured to check the packet reception during the time duration (for example, 30 seconds or 40 seconds) of O_Intv2 in S76 and S77. In response to that a response packet is received from the function controller 550 (S77-Yes), the OS controller 200 determines that the function controller 550 is in a normal operating state. Thus, the OS controller 200 records and initializes the counter as the number of error occurrences, and then, waits for the preset monitoring interval O_Intvl in S67 and then proceeds to S62 again.

In this regard, instead of waiting for the reception of the response packet during the time duration of the O_Intv2, the OS controller 200 may perform packet re-transmission K times and check the reception of the response packet accordingly. This may be implemented in various ways.

On the other hand, in response to that no packet is received during the time duration (for example, 30 seconds or 40 seconds) of the O_Intv2, the OS controller 200 notifies the user about the error of the function controller 550 and restricts the function of the functional unit 500 in S78. In this process, the OS controller 200 may record the number of error occurrences, etc.

That is, in response to that the OS controller 200 does not receive a response packet from the function controller 550 during the O_Intv2 as included in one embodiment of the error determination time duration, the OS controller 200 may display a message indicating that the cooking appliance 1000 cannot perform cooking on the display 160 of the digital controller door 100 and store error occurrence information in the internal memory thereof.

For example, the OS controller 200 may display an ongoing notification on the display 160 to notify the user that the cooking function of the cooking appliance cannot be used. Then, the OS controller 200 cancels any cooking currently in progress if any. Then, the OS controller 200 only performs a function (such as the human interface, the O_element monitoring, etc. of FIG. 3) that is not performed by the functional unit 500, other than the cooking function of the cooking appliance.

Afterwards, in response to that the error has been solved via device inspection, etc., the OS controller 200 may remove the ongoing notification displayed on the display 160 and display an interface that allows the cooking function to be used on the display 160.

The embodiment of FIG. 8 may be applied to an embodiment in which the cooking appliance 1000 is a microwave oven, the function controller 550 is a microcomputer that controls the microwave oven, and the OS controller 200 is an Android OS (Android).

In this case, when a communication error from the microcomputer to the Android occur, the Android OS may respond to the error as follows. As examined in S73, the OS controller 200 (for example, the Android OS) performs UART port close/open.

That is, in response to that the Android OS does not receive a response to the TX (downlink) from the microcomputer within 300ms, the Android OS requests the microcomputer to re-transmit a total of N times (for example, 3 times). In response to that the Android OS does not receive a response to the N (3) times of re-transmissions, the Android OS determines that there is a communication error and performs UART port reset (close/open) to resume communication with the microcomputer.

Meanwhile, in response to that communication is not possible for 30 to 40 seconds even though the communication channel reset operation has been executed, the OS controller 200 (for example, the Android OS) displays an error message on the screen and cancels the cooking in progress. The process in which the error message is displayed as an ongoing notification and the notification is removed when the error has been solved is the same as discussed above. In this regard, the notification may be prevented from being arbitrarily removed by the user, so that the selection of the cooking function or the operation for cooking of the cooking appliance may be blocked.

This corresponds to the case where the OS controller 200 (for example, the Android OS) requests re-transmission when it does not receive a response from the function controller 550 (for example, the microcomputer). In response to that the response is not received continuously, the OS controller 200 may reset the port and resume communication. However, in response to that the communication is not possible for a predefined time duration (for example, 30 to 40 seconds) even though the above reset operation has been executed, the OS controller 200 displays an error message, cancels cooking, and displays a notification so that the user may check the situation.

In response to that an error occurs in the microcomputer as an example of the function controller 550, the OS controller 200 may only use functions unrelated to the microcomputer. In response to that the user selects a specific function of the microwave oven, the OS controller 200 indicates that the microcomputer has a failure.

The timer or various time intervals used in FIGS. 6 to 8 may be implemented as a counter. Conversely, the counter used in FIGS. 6 to 8 may also be implemented as the time interval.

That is, the OS controller 200 and the function controller 550 may use a scheme of counting the error occurrences or checking the elapsed time duration in terms of a temporal criterion used for one of the OS controller 200 and the function controller 550 to check whether the other of the OS controller 200 and the function controller 550 is in an error state or a normal operating state.

Further, the temporal criteria may vary according to the function performed by each of the OS controller 200 and the function controller 550, the number of past error occurrences, or the age of the home appliance, etc.

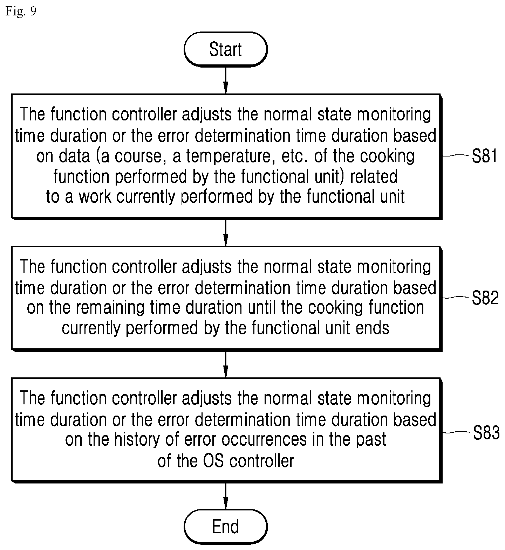

FIG. 9 is a diagram showing a process in which the function controller is configured to adjust the normal state monitoring time duration or the error determination time duration described above according to one embodiment of the present invention.

The function controller 550 may adjust the normal state monitoring time duration or the error determination time duration based on data (a course, a temperature, etc. of the cooking function performed by the functional unit) related to a work currently performed by the functional unit 500 in S81.

In one embodiment, when the functional unit 500 performs a work performed at a temperature higher than a predefined value, the function controller 550 may adjust the normal state monitoring time duration or the error determination time duration to be shorter for safety. In this case, when an error occurs in communication with the OS controller 200, the function controller 550 may immediately check the error occurrence status and cancel the operation of the functional unit 500.

In another embodiment, in response to that the functional unit 500 performs a function executed at a low temperature below a predefined reference value, or in response to that the functional unit 500 is not cooking, the function controller 550 may adjust the normal state monitoring time duration or the error determination time duration to a longer time duration. In this case, in response to that an abnormality occurs in the communication with the OS controller 200, the OS controller 200 may wait to resolve the error by itself, and the function controller 550 may slowly check the error occurrence state and cancel the operation of the functional unit 500.

Moreover, the function controller 550 may adjust the normal state monitoring time duration or the error determination time duration based on the remaining time duration until the cooking function currently performed by the functional unit 500 ends in S82.

In response to that the cooking function has ended within a preset reference time duration such as 1 second or 3 seconds, the function controller 550 may adjust the normal state monitoring time duration or the error determination time duration to a longer time duration. As a result, even when an error occurs, the function controller 550 may determine whether a communication error with the OS controller 200 occurs or resolve the communication error after the cooking function that is about to end has been terminated.

Conversely, in response to that the remaining time duration until the end of the cooking function currently performed by the functional unit 500 is greater (for example, 3 minutes, 10 minutes, etc.), the normal state monitoring time duration or the error determination time duration may be set to a default setting, such that the abnormal state of the OS controller 200 may be checked during the normal determination time duration.

Next, the function controller 550 may adjust the normal state monitoring time duration or the error determination time duration based on the history of error occurrences in the past of the OS controller 200 in S83. For example, in response to that there is no record of an error occurrence in the OS controller 200 for a predefined period of time in the past, for example, the past 3 months, the normal state monitoring time duration or the error determination time duration may be applied in a non-changed state.

On the other hand, in response to that the number of times an error has occurred in the past is N times (for example, 5 times) or greater, it is determined that the possibility of an error currently occurring increases. Thus, the function controller 550 may adjust the normal state monitoring time duration or the error determination time duration to a shorter time duration to quickly check a communication abnormality with the OS controller 200.

In this way, the function controller 550 may increase or decrease the normal state monitoring time duration or the error determination time duration according to a specific situation. When the situation is solved, the normal state monitoring time duration or the error determination time duration may be restored to the default value.

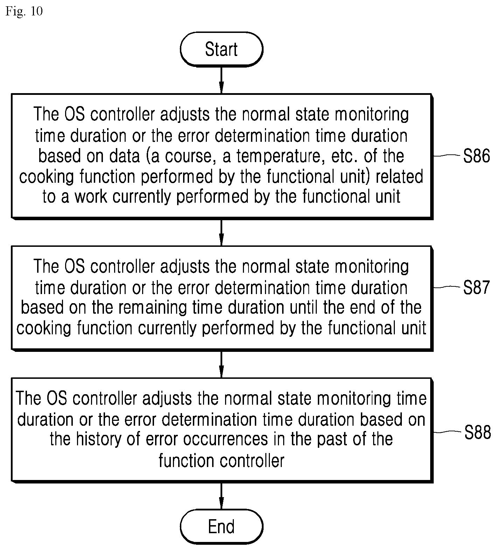

FIG. 10 is a diagram showing a process in which the OS controller is configured to adjust the above-described normal state monitoring time duration or error determination time duration according to one embodiment of the present invention.

The OS controller 200 may adjust the normal state monitoring time duration or the error determination time duration based on data (a course, a temperature, etc. of the cooking function performed by the functional unit) related to a work currently performed by the functional unit 500 in S86.

In one embodiment, when the functional unit (i.e., function unit) 500 performs a function at a temperature higher than a predefined reference value, the OS controller 200 may adjust the normal state monitoring time duration or the error determination time duration to be shorter for safety. In this case, when an error occurs in communication with the function controller 550, the OS controller 200 may immediately check the error occurrence state and perform a subsequent task to restore the normal state.

In another embodiment, when the functional unit 500 performs a function at a temperature lower than a predefined reference value, or when the functional unit 500 is not cooking, the OS controller 200 may adjust the normal state monitoring time duration or the error determination time duration to be longer. In this case, when an error occurs in communication with the function controller 550, the OS controller 200 may increase the number of times of communication channel resets to resolve the error or may slowly check the error occurrence state.

Moreover, the OS controller 200 may adjust the normal state monitoring time duration or the error determination time duration based on the remaining time duration until the end of the cooking function currently performed by the functional unit 500 in S87.

In response to that the cooking function is finished within the preset time duration criteria, such as 1 second or 3 seconds, the OS controller 200 may adjust the normal state monitoring time duration or the error determination time duration to a greater value. As a result, in response to that an error occurs, the OS controller 200 may determine whether a communication error with the function controller 550 occurs or resolve the error after the cooking function that is about to end has been finished.

Conversely, in response to that the remaining time duration until the end of the cooking function currently performed by the functional unit 500 is greater, for example, 3 minutes or 10 minutes, the normal state monitoring time duration or the error determination time duration may be set to the default setting, such that the abnormal state of the function controller 550 may be identified during the normal determination time duration.

Next, the OS controller 200 may adjust the normal state monitoring time duration or the error determination time duration based on the history of error occurrences in the past of the function controller 550 in S88. For example, in response to that there is no record of error occurrence in the function controller 550 for a predefined period of time in the past, for example, for the past 3 months, the normal state monitoring time duration or the error determination time duration may be applied in a non-changed state.

On the other hand, in response to that the number of times an error has occurred for a predefined period of time in the past is N times (for example, 5 times) or greater, it is determined that the possibility of the error currently occurring increases. Thus, the OS controller 200 may adjust the normal state monitoring time duration or the error determination time duration to a shorter time value to quickly check an abnormal communication status with the function controller 550.

In this way, the OS controller 200 may increase or decrease the normal state monitoring time duration or the error determination time duration according to a specific situation. When the situation has been solved, the normal state monitoring time duration or the error determination time duration may be restored to the default value.

In a case where the OS controller 200 according to an embodiment of the present invention is embodied as an Android board that controls the LCD or OLED screen of the digital controller door and the touch input thereon, and the function controller 550 is embodied as a microcomputer or a main PCB that controls the operation of the microwave oven, the above embodiment may be implemented as follows.

The digital controller door 100 may control communication between the Android board and the main PCB and the operation thereof. The Android board may control the digital controller door and may also provide a user interface for controlling the cooking function (the cooking function of the microwave oven) of the cooking appliance 1000 to the display 160. That is, the user may control the function of the microwave oven using the user interface displayed on the screen of the digital controller door 100 controlled by the Android board.

That is, the Android board may process information related to the digital function provided by the digital controller door 100. Moreover, the Android board may control the function of the microwave oven through a predetermined communication medium (such as a wired or wireless medium) with the microcomputer (main PCB) of the microwave oven and display the operation status of the microwave oven on the screen.

The Android OS controller (Android OS Control Unit) of the Android board may communicate with and control the microwave oven controller (as an example of the function controller) as a controller of the microwave oven (Microwave Oven Control Unit). The microwave oven controller (Microwave Oven Control Unit) as the controller of the microwave oven is an example of the function controller of the functional unit 500 and may provide a typical oven function.

The Android OS controller (Android OS Control Unit) of the Android board may control the screen and provide a user interface according to touch input to the screen, communicate with an external server, and provide the function of the ThinQ app. In addition, when a new function is upgraded, the Android OS controller (Android OS Control Unit) of the Android board may display a new UI/UX corresponding to the upgraded function on the screen and instruct the microwave oven controller (Microwave Oven Control Unit) to perform a predefined function operation accordingly.

In response to that a communication error occurs between the microwave oven controller (Microwave Oven Control Unit) or the microcomputer and the Android board, or in response to that one thereof is turned off such that a communication error occurs, a following process may be performed to cope with the error.

The Android board ultimately provides an interface that contacts the user. Thus, in response to that communication with the microcomputer board is cut off or an abnormality occurs in the microcomputer board, the Android board displays this situation on the screen to notify the user of the situation. Since the user may check information about the microwave oven through the Android board, the Android may continuously collect, store, and monitor various information generated during the operation of the microwave oven.

Next, an example in which the auto ventilation operation is maintained when the function controller 550 checks an abnormality in the OS controller 200 will be described.

When the thermistor 595 detects the temperature, the ventilation fan 590 may automatically operate based on the detected temperature. This is referred to as the auto ventilation. The function controller 550 may automatically activate the auto ventilation function based on the temperature sensed by the thermistor 595 to prevent component failure or damage.

That is, the function controller 550 may activate the auto-ventilation function when it is determined that the temperature of the thermistor is equal to or higher than a predetermined temperature, and accordingly, may notify the OS controller 200 of information indicating that the auto-ventilation function is being activated. In response to reception of the notification, the OS controller 200 may display an auto ventilation operation state on the display 160.

The OS controller 200 may display, on the display 160, a pop-up message indicating that the auto ventilation is being activated when the temperature sensed by the thermistor 595 reaches a predetermined temperature condition. This is a function that the user may not cancel or change arbitrarily. Accordingly, the OS controller 200 may display information indicating that the auto ventilation operation is being performed on the display 160 and may also output a message indicating that the auto ventilation operation cannot be changed or cancelled. The user may not set a timer for this auto ventilation operation. The ventilation fan 590 is terminated when the auto ventilation has been terminated even though the user turns off the cooking appliance 1000 on the display 160.

In addition, the auto-ventilation may be executed when a timer is set. In this case, the OS controller 200 may display a remaining timer time on the display 160 when the auto-ventilation operation has been terminated. In addition, when the auto-ventilation operation ends and the timer time ends, the ventilation fan 590 is also turned off.

In one example, when the user starts to operate the ventilation fan 590 during the cooking, an operation intensity of the ventilation fan 590 may not be set to a turbo level (strong intensity). After the cooking has been finished, the ventilation fan 590 may operate in the turbo level as long as the previously set ventilation fan intensity is the turbo level.

As described above, the auto ventilation function refers to a function provided to protect components of the cooking appliance 1000. Accordingly, when an error occurs in a process in which the function controller 550 cooperates with the OS controller 200, the operations of other components of the functional unit 500 may be canceled, but the operation of the ventilation fan 590 executing the auto ventilation may be maintained. Similarly, even when there is no instruction from the OS controller 200, the function controller 550 may automatically start or end the operation of the ventilation fan 590 based on the temperature sensed by the thermistor 595.

Hereinafter, a schematic outer appearance and configuration of a cooking appliance including the digital controller door 100 of the present invention will be described. This corresponds to one embodiment of the present invention, and a scheme and a direction in which the digital controller door 100 is opened may be implemented in various ways.

The present invention relates to a scheme for controlling a cooking appliance using a digital controller door disposed at a front surface of the cooking appliance.

According to the present invention, a door of a microwave oven disposed on top of an oven or a gas stove acts as a LCD screen (an embodiment of a display). The Android (an embodiment of a OS controller) of the LCD screen and the microcomputer (an embodiment of a function controller) of the microwave oven cooperate with each other. A LCD component operates according to various operating/external environments of the microwave oven or controls a specific function of the microwave oven.

The digital controller door of the present invention may be combined with the cooking appliance to open and close the inside of the cooking appliance. An embodiment of the cooking appliance of the present invention is a microwave oven. However, embodiments of the present invention is not limited thereto. An embodiment of the cooking appliance including the digital controller door of the present invention includes each of various cooking appliances which includes a door equipped with a display such as a LCD providing various user interfaces such as a touch screen, and is capable of storing and cooking food therein.

A display may be mounted on a front surface of a digital controller door provided in the cooking appliance of the present invention to provide various information to a user. The user may know the cooking state of the cooked food on the display.

In addition, when the display is connected to another home appliance to serve as a hub of the home appliances, the information other than cooking food may be obtained through the display. In addition, a command necessary for cooking and various other commands may be input to the display in a touch manner.

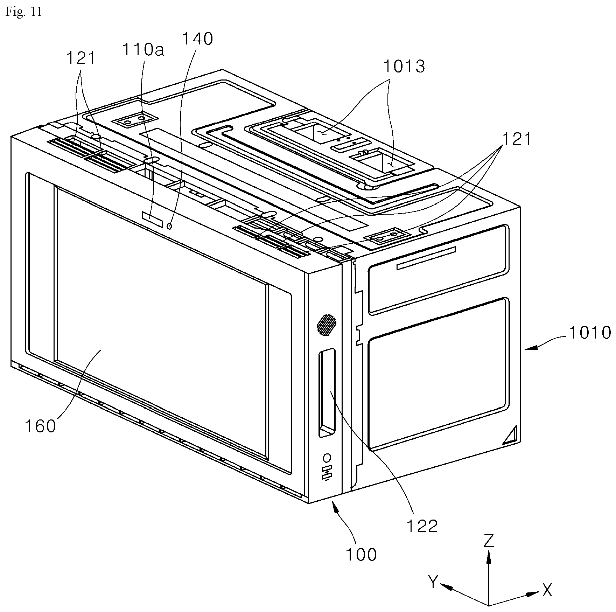

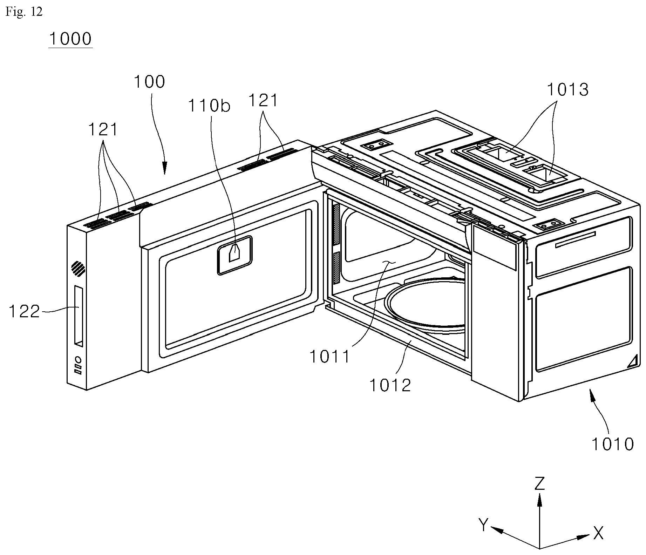

FIG. 11 is a perspective view illustrating a cooking appliance according to an embodiment of the present invention. FIG. 12 is a diagram illustrating a state in which the digital controller door 100 is opened in FIG. 11.

The cooking appliance according to the embodiment may be disposed at a position spaced apart from the heating cooking device in the vertical direction above a position where a heating-type oven, a gas stove, etc. are disposed.

Due to the arrangement of the cooking appliance, a user may conveniently use the heating cooking device including the cooking appliance. In addition, the cooking appliance may serve as a hood of the heating cooking device disposed under the cooking appliance. In this case, the cooking appliance may include components for use as the hood.

The cooking appliance may cook food using microwaves belonging to electromagnetic waves and/or heater heat. The cooking appliance may include the body 1010 in which a cavity 1011 is formed, and the digital controller door 100 configured to open and close the cavity 1011. The body 1010 is an embodiment of the functional unit 500 of FIG. 2 as described above. According to an embodiment of the present invention, the body 1010 may act in the same manner as the functional unit 500 may. Alternatively, according to an embodiment of the present invention, the components of the functional unit 500 may be implemented in the body 1010. Accordingly, in various embodiments, the functional unit 500 and the body 1010 may be interchangeable with each other.

Food to be cooked may be placed in the cavity 1011. The digital controller door 100 may be disposed in front of the cavity 1011 and pivotally mounted at the body 1010 to open and close the cavity 1011.

A ventilation hole 1013 for discharging air suctioned from a suction unit provided at a lower portion of the body 1010 to the outside may be provided at an upper portion of the body 1010. A suction unit may be provided at a lower portion of the body 1010 of the cooking appliance. Accordingly, the cooking appliance may serve as a hood that sucks air discharged from the heating cooking device disposed below the cooking appliance and discharges the air to the outside.

The body 1010 may further include a front panel 1012 provided along an edge of an inlet of the cavity 1011. One surface of the front panel 1012 faces one surface of a choke member when the digital controller door 100 is closed, thereby closing the cavity 1011.

The front panel 1012 may be constructed to surround the edge of the inlet of the cavity 1011 and protrude in a frontward direction and has a predetermined width. Accordingly, when the digital controller door 100 is closed, the edge portion of the digital controller door 100 and the cavity 111 may overlap each other.

Due to this structure, the front panel 1012 may seal the cavity 1011 in a state in which the digital controller door 100 has been closed, thereby preventing oil, moisture, oil vapor, etc. generated during the cooking process of the food placed in the cavity 1011 from being leaked out to the outside through the inlet of the cavity 1011.

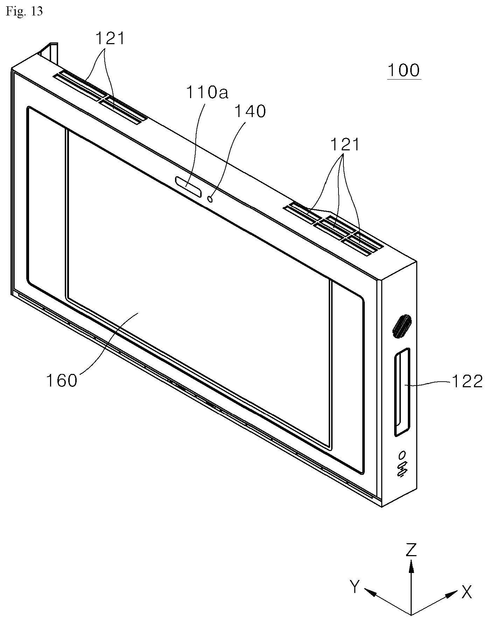

FIG. 13 is a perspective view illustrating a digital controller door of a cooking appliance according to an embodiment of the present invention.

The digital controller door 100 may include controller hardware (e.g., a hardware chip) or controller software (software including programs) that executes a predetermined algorithm and performs following tasks based on sensing results from various sensors disposed at the cooking appliance or the door and an operating state of the cooking appliance.

In FIGS. 11 to 13, a reference numeral 121 denotes a through hole through which air is introduced or discharged. A first camera 110a and the sensor 140 may be disposed on the front surface of the digital controller door 100. The sensor 140 includes a human sensor, an illuminance sensor, etc.

The display 160 is used to control the cooking appliance 1000 or displays an operation process in the cooking appliance 1000. The ventilation hole 1013 may include a suction portion defined at a lower end of the body 1010 and a discharge portion defined at an upper end of the body 1010. A handle 122 is disposed on one side of the digital controller door 100 such that the user may open and close the digital controller door 100 using the handle.

A second camera 110b may be disposed on an inner side surface of the digital controller door 100, and the second camera 110b may photograph the inside of the cavity 1011 to check the cooking state.

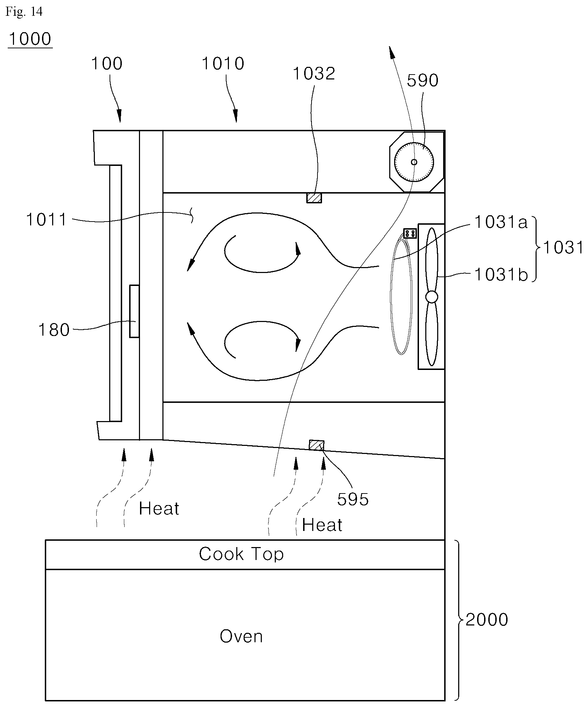

FIG. 14 is a schematic view illustrating a position where a cooking appliance is disposed according to an embodiment of the present invention. In FIG. 14, the flow of air is indicated by a solid line arrow, and the transfer direction of heat is indicated by a hidden line arrow. A heating cooking device 2000 may include, for example, an oven and a cooktop disposed on top of the oven.

The cooking appliance may include a convection-based heating device 1031 and a microwave generating device 1032 to heat food accommodated in the cavity 1011.

The convection-based heating device 1031 may generate heat to heat food, and the microwave generating device 1032 may generate microwaves to heat food. The user may select and operate one of the convection-based heating device 1031 or the microwave generating device 1032 to heat and cook food.

The convection-based heating device 1031 may include a convection heater 1031a and a convection fan 1031b. The convection heater may generate heat to heat food accommodated in the cavity 1011. The convection fan 1031b may force the air in the cavity 10 11 heated by the convection heater 1031a to flow in the cavity 1011.

When the convection fan 1031b operates, the heated air may be smoothly convectively circulated in the cavity 1011, and accordingly, heat is uniformly supplied to the entire cavity 10 11, so that an entirety of the food accommodated in the cavity 1011 may be evenly cooked.

In order to prevent the display 160 provided in the digital controller door 100 from being overheated by the heated air coming up from the heating cooking device disposed under the cooking appliance, resulting in malfunction of or damage to the display 160, it is necessary to cool the display 160 and prevent external heat from being transferred to the display 160. The door fan 180 and the ventilation fan 590 may perform the above role.

The door fan 180 may be disposed inside the digital controller door 100. The door fan 180 may effectively cool the display 160 by flowing air toward the rear surface of the display 160.

In addition, the air flow discharged from the door fan 180 to the outside of the digital controller door 100 may form an air curtain to block the heat rising from the heating cooking device disposed under the cooking appliance.

The ventilation fan 590 may be disposed at a top of the body 1010 and may be disposed in a flow path of the ventilation hole 1013. The ventilation fan 590 may allow air coming up from the heating cooking device to flow to the ventilation hole 1013 to discharge the air to out of the cooking appliance.

Accordingly, when the ventilation fan 590 operates, a significant portion of the heated air coming up from the heating cooking device flows to the ventilation hole 1013 formed in the body 1010, and the flow rate of air heading to the display 160 of the digital controller door 100 may be relatively reduced. As a result, the flow rate of the heated air directed to the display 160 of the digital controller door 100 is reduced, thereby suppressing overheating of the display 160.

In order to block overheating of the display 160, it is necessary to appropriately use the door fan 180 and the ventilation fan 590. Since one of main purposes of the door fan 180 is to prevent the overheating of the display 160, the door fan 180 may operate in a low-speed rotation mode and a high-speed rotation mode based on the temperature condition of air approaching the digital controller door 100.

The door fan 180 has a small amount of air blown in the low-speed rotation mode and a large amount of air blown in the high-speed rotation mode. Therefore, the temperature of the display 160 may be effectively lowered by the door fan operating in the low-speed rotation mode when the temperature of the air is low and by the door fan operating in the high-speed rotation mode when the temperature of the air is high.

In order to reliably suppress the overheating of the display 160, it is advantageous to operate both the door fan 180 and the ventilation fan 590 and operate the door fan 180 in the high-speed rotation mode.

The thermistor 595 disposed at a bottom of the cooking appliance 1000 may sense the heat from the heating cooking device disposed under the cooking appliance 1000. In addition, the auto ventilation function may operate upon sensing the heat.

In another embodiment of the present invention, the function controller and the OS controller may be implemented in a single controller, in which case the function controller and the OS controller may be implemented in a single board. In this case, there is one controller based on one board, and a function controller section and an OS controller section may be implemented in the single controller, respectively.

In addition, a memory required for an operation of each function may be defined such that different memory addresses used by different controller sections are allocated in one memory, or a separate memory may be assigned to each controller section.

According to some embodiments of the present invention, the controller may be implemented as one piece of hardware or the controller may be implemented as multiple pieces of hardware.

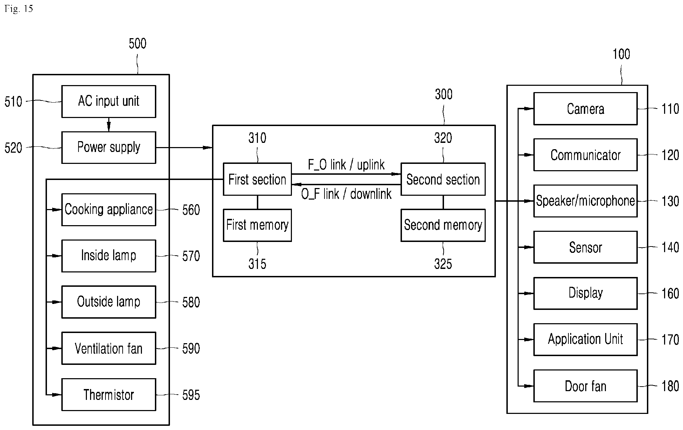

FIG. 15 is a diagram showing a configuration in which one controller controls a functional unit and a digital controller door according to one embodiment of the present invention.

A controller 300 includes a first section 310 that controls the functional unit 500 and a second section 320 that controls the digital controller door 100. Each section may write and read data to and from each of allocated memories 315 and 325 thereto. The first section 310 may write and read data using the first memory 315. The second section 320 may write and read data using the second memory 325.

The sections are functionally divided. One chip constituting the controller 300 may perform a function of the first section 310 and a function of the second section 320. Alternatively, two chips constituting the controller 300 may perform the functions of the first section 310 and the second section 320, respectively. Alternatively, some of the chips that constitute the controller 300 may perform the function of the first section 310 and others thereof may perform the function of the second section 320.

Alternatively, the controller 300 may be implemented with one software or may be implemented with multiple software. Alternatively, the controller 300 may include a hardware configuration that enables the operation of one or more software.

In one embodiment of the present invention, a data link is established between the two sections and data may be transmitted and received through the link. A F_O link or an uplink is a link through which the first section 310 transmits data to the second section 320. An O_F link O_F link or a downlink is a link through which the second section 310 transmits data to the first section 310.

In another embodiment of the present invention, one link is established between the two sections and data may be transmitted and received through the one link.

According to one embodiment of the present invention, the controller 300 may be disposed in the digital controller door 100.

According to another embodiment of the present invention, the controller 300 may be disposed in the functional unit 500.

According to still another embodiment of the present invention, the controller 300 may be disposed in a separate terminal or in another home appliance.

The controller 300 may control the functional unit 500 and the digital controller door 100, and may restrict the operation of one or both of the functional unit 500 or the digital controller door 100 or cancel the function in operation depending on the transmission/reception status of the packet transmitted/received between the functional unit 500 and the digital controller door 100.

In this regard, the controller 300 may first cancel only the function that should be canceled (stopped) among the functions of the functional unit 500 and the digital controller door 100, and may maintain or cancel the other auxiliary functions among the functions of the functional unit 500 and the digital controller door 100.

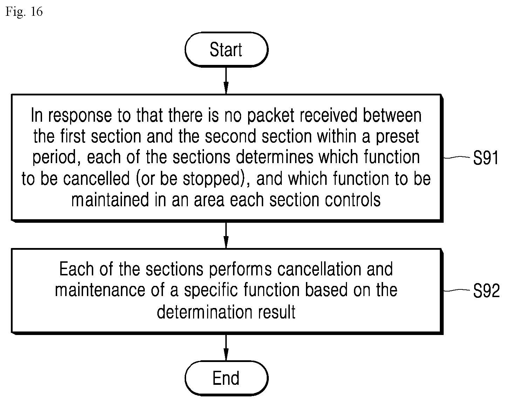

FIG. 16 is a diagram showing a process in which a controller controls the function of a cooking appliance according to one embodiment of the present invention.

In response to that there is no packet received between the first section 310 and the second section 320 within a preset period, each of the sections 310 and 320 may determine which function to be cancelled (or be stopped), and which function to be maintained in an area each section controls in S91.

Then, each of the sections 310 and 320 may perform cancellation and maintenance of a specific function based on the determination result in S92.

Which function to be canceled and which function to be maintained may be preset. In addition, each of the sections 310 and 320 may determine cancellation or maintenance of a specific function based on a value set by the user to the cooking appliance or a history of cancellation (stop), or maintenance of the specific function of the cooking appliance in the past.

In one embodiment, the first section 310 of the controller 300 may perform a follow-up task in response to that there is no packet received from the second section 320 controlling the digital controller door 100 within a preset period.

In one embodiment, in response to that there is no packet received from the second section 320 for a preset period of time in S91, the first section 310 may cancel the cooking function performed by the functional unit 500 and maintain or cancel the auxiliary function performed by the functional unit 500 according to the preset value.

The cooking function is a function related to heating, etc. The auxiliary function is a function related to the operation of each of additional components other than the cooking function.

As described above, in one example, the preset value includes a value set by the user to the cooking appliance or a value of the history of cancellation (stop), or maintenance of the specific function of the cooking appliance in the past.

In response to that the user sets the inside lamp 570 or the outside lamp 580 to be turned on even when the cooking of the cooking appliance is canceled, the first section 310 may determine to maintain the on state of the lamp in the S91/S92 process. Alternatively, the first section 310 may maintain or cancel the operation of the ventilation fan 590. In response to that the ventilation fan 590 is in the auto ventilation state, the first section 310 may maintain the operation state of the ventilation fan 590.

In the past, when the cooking function of the cooking appliance has been canceled in due to a problem in transmitting and receiving, the user turned the turned-off lamp back on. This past history may be stored in the memory. In this case, the first section 310 may determine to maintain the lamp in a turned on state in the S91/S92 process.

In another embodiment, in response to that there is no packet received from the first section 310 for a preset period of time, the second section 320 cancels the cooking function of the functional unit 500 and a first function of the digital controller door 100. The second section 320 maintains or cancels the auxiliary function performed by the functional unit 500 and a second function of the digital controller door 100.

In this regard, the first function is a function that should be canceled in response to that there is no packet received from the functional unit 500. The second function is a function that may be selectively canceled or maintained when there is no packet received from the functional unit 500.

This may be selectively applied according to a preset value. In addition, in response to that a user selects a specific function through the interface of the digital controller door 100, the specific function may be canceled or maintained.

In one example, the first section 310 or the second section 320 may apply a priority in canceling the function.

For example, based on a function (such as a cooking function or the first function) which should be canceled at first and a function (such as an auxiliary function or the second function) that should be canceled at a next cancel priority, the first section 310 or the second section 320 may first cancel a specific function having the first cancel priority, and then cancel a function having the next cancel priority.

In addition, the cancellation schemes or the monitoring/waiting time durations may be different from each other based on different sections.

For example, the first section 310 may immediately cancel the operation of the functional unit 500 in response to that no packets are received from the second section 320 during a preset period.

Further, in response to that there are no packets received from the first section 310 during a preset period, the second section 320 may check whether there are any packets received from the first section 310 during the error determination time duration, and then, cancel the function of the digital controller door 100. The error determination time duration includes the time duration for which a task such as requesting re-transmission of a response packet in response to that there is no reception after transmitting a monitoring packet is performed.

In this regard, the operation of the functional unit 500 is directly related to cooking. Thus, in response to that there is no received packet, the first section 310 immediately cancels the operation of the functional unit 500. In addition, the operation of the digital controller door 100 is not directly related to cooking. Thus, in response to that there is no received packet, the second section 320 may perform an additional work and then, cancel the operation of each of the digital controller door 100 and the functional unit 500.

According to one embodiment of the present invention, the function controller 550 may perform an immediate cancellation mechanism or the OS controller 200 may perform a suspended cancellation mechanism depending on the transmission and reception status of the packet transmitted and received between the function controller 550 controlling the functional unit 500 and the OS (Operating System) controller 200 controlling the digital controller door 100.

The immediate cancellation mechanism is a mechanism in which the function controller 550 cancels the operation of each of the components of the functional unit 500.

The function controller 550 may check the reception status of the packets during the normal state monitoring time duration. In response to that no packets are received during the normal state monitoring time duration, the function controller 550 may cancel the operation of each of the components of the functional unit 500.

Alternatively, the function controller 550 may check the packet reception status during the normal state monitoring time duration. Then, in response to that the packet is not received during the normal state monitoring time duration, the function controller 550 may immediately cancel the operation of the cooking appliance function provider 560, and may re-check the packet reception status or perform a function to resolve the error during the error determination time duration.

The suspended cancellation mechanism is a mechanism in which the OS controller 200 performs monitoring or waits for a preset time duration and then, cancels the operation of the component of the digital controller door 100.

The OS controller 200 may check the packet reception status during the normal state monitoring time duration and. In response to that the packet is not received during the normal state monitoring time duration, the OS controller 200 may re-check the packet reception status or perform a function to resolve the error during the error determination time duration.

In addition, in response to that no packet is transmitted or received between the function controller 550 and the OS controller 200 for a preset period, the function controller 550 or the OS controller 200 may reset the communication channel. Both components 550 and 200 may check the packet transmission/reception error status and may reset the communication channel based on the checking result.

A cooking appliance according to the present invention includes a functional unit, a digital controller door, a operating system (OS) controller, and a function controller, wherein the functional unit includes a cavity for receiving food, and one or more functional components, and the functional unit is configured to provide a cooking function, wherein the digital controller door is coupled to the functional unit, and the digital controller door includes a display configured to provide a user interface, and one or more door-mounted peripheral devices; wherein the OS controller is configured to control an operation of the digital controller door; and wherein the function controller is configured to monitor a communication between the function controller and the OS controller, in response to a communication error occurring between the function controller and the OS controller, perform at least one of a restriction operation to restrict at least one of the one or more functional components of the functional unit, a reset operation to reset the OS controller and turn off the display, and a report generation operation to store information related to the communication error.

The function controller is further configured to transmit a monitoring request packet to the OS controller, determine whether a monitoring response packet has been received from the OS controller within a predetermined amount of time after transmission of the monitoring request packet, and in response to the predetermined amount of time elapsing without the monitoring packet being received by the function controller, perform at least one of a cooking cancelation operation to cancel a cooking function of the functional unit and the reset operation to reset the OS controller. The function controller is further configured to, in response to the functional unit currently performing a cooking operation, adjust the predetermined amount of time based on at least one of a course or temperature related to the cooking operation, a remaining time until completion of the cooking operation, and a past error occurrence record of the OS controller.

The function controller is further configured to, in response to the communication error occurring between the function controller and the OS controller, perform the restriction operation to restrict the at least one of the one or more functional components of the functional unit while allowing another one of the one or more functional components to continue operating in an active state. One or more functional components of the functional unit includes at least one of a ventilation fan, an internal cavity lamp, an external lamp, an internal camera, a microwave generator, a turntable motor, and a heating element. The function controller is disposed in the functional unit of the cooking appliance, and wherein the OS controller is disposed in the digital controller door, the OS controller being separate from the function controller. The function controller and the OS controller are different sections of a same microchip, or different sections of a same printed circuit board.

A cooking appliance according to the present invention includes a functional unit, a digital controller door, a function controller, and a operating system (OS) controller, wherein the functional unit includes a cavity for receiving food, and one or more functional components, the functional unit being configured to provide a cooking function; wherein the digital controller door is coupled to the functional unit, the digital controller door including a display configured to provide a user interface, and one or more door-mounted peripheral devices; wherein the function controller is configured to control an operation of the functional unit; and wherein the OS controller is configured to monitor a communication between the OS controller and the function controller, in response to a communication error occurring between the OS controller and the function controller, perform at least one of a channel reset operation to reset a communication channel between the controller door and the function controller, a cancelation operation to cancel a function currently being executed by the functional unit, and an error display operation to display an error message on the display of the digital controller door.

The OS controller is further configured to transmit a transmission packet to the function controller, determine whether a response packet has been received from the function controller within a predetermined amount of time after transmission of the transmission packet, and in response to the predetermined amount of time elapsing without the response packet being received by the OS controller, perform at least one of the channel reset operation to reset the communication channel between the controller door and the function controller, and the error display operation to display the error message. The OS controller is further configured to adjust the predetermined amount of time based on at least one of a course or temperature related to a cooking operation being performed by the functional unit, a remaining time until completion of the cooking operation, and a past error occurrence record of the function controller.

A method for controlling a cooking appliance according to an embodiment of the present invention is provided. The method comprises: displaying a user interface by a display of a digital controller door that is coupled to a functional unit of the cooking appliance, the functional unit including a cavity for receiving food, and one or more functional components; controlling, by a operating system (OS) controller, an operation of the digital controller door; monitoring, by a function controller, a communication between the function controller and the OS controller; and in response to a communication error occurring between the function controller and the OS controller, performing by the function controller at least one of restricting at least one of the one or more functional components of the functional unit, resetting the OS controller, and generating a report to store information related to the communication error.

The method further comprises transmitting, by the function controller, a monitoring request packet to the OS controller; determining, by the function controller, whether a monitoring response packet has been received from the OS controller within a predetermined amount of time after the transmitting of the monitoring request packet; and in response to the predetermined amount of time elapsing without the monitoring packet being received by the function controller, performing at least one of canceling a cooking function of the functional unit and resetting the OS controller. The method further comprises, in response to the functional unit currently performing a cooking operation, adjusting by the function controller the predetermined amount of time based on at least one of a course or temperature related to the cooking operation, a remaining time until completion of the cooking operation, and a past error occurrence record of the OS controller.

The method further comprises, in response to the communication error occurring between the function controller and the OS controller, restricting by the function controller the at least one of the one or more functional components of the functional unit while allowing another one of the one or more functional components to continue operating in an active state. The method further comprises, wherein the one or more functional components of the functional unit includes at least one of a ventilation fan, an internal cavity lamp, an external lamp, an internal camera, a microwave generator, a turntable motor, and a heating element. The method further comprises, wherein the function controller is disposed in the functional unit of the cooking appliance, and wherein the OS controller is disposed in the digital controller door, the OS controller being separate from the function controller. The method further comprises, wherein the function controller and the OS controller are different sections of a same microchip, or different sections of a same printed circuit board.

A method of controlling a cooking appliance according to an embodiment of the present invention is provided. The method comprises: displaying a user interface by a display of a digital controller door that is coupled to a functional unit of the cooking appliance, the functional unit including a cavity for receiving food, and one or more functional components; controlling, by a function controller, an operation of the functional unit; monitoring, by a OS controller, a communication between the function controller and the operating system (OS) controller; and in response to a communication error occurring between the OS controller and the function controller, performing by the OS controller at least one of resetting a communication channel between the controller door and the function controller, canceling a function currently being executed by the functional unit, and displaying an error message on the display of the digital controller door.

The method further comprises, transmitting, by the OS controller, a transmission packet to the function controller; determining, by the OS controller, whether a response packet has been received from the function controller within a predetermined amount of time after the transmitting of the transmission packet; and in response to the predetermined amount of time elapsing without the response packet being received by the OS controller, performing by the OS controller at least one of resetting the communication channel between the controller door and the function controller, and displaying the error message. The method further comprises, adjusting, by the OS controller, the predetermined amount of time based on at least one of a course or temperature related to a cooking operation being performed by the functional unit, a remaining time until completion of the cooking operation, and a past error occurrence record of the function controller.

An embodiment of the present invention in which all the components are combined with each other or operate in combination with each other has been described. However, the present invention is not necessarily limited to this embodiment. Within the scope of the purpose of the present invention, at least two of all components may be selectively combined with other or may operate in the selectively combined manner with other. Furthermore, each of the components may be implemented as an independent hardware. However, some or all of the components may be selectively combined with each other and thus may be implemented using a computer program with a program module to perform some or all of the functions combined in one or more pieces of hardware. The codes and code segments that constitute the computer program may be easily deduced by a person skilled in the art from the present invention. The computer program may be stored in computer readable media and read and executed by a computer, thereby implementing the method of the present invention. The storage media for storing the computer program may include storage media including magnetic recording media, optical recording media, and semiconductor recording devices. Additionally, the computer program implementing an embodiment of the present invention includes a program module transmitted in real time through an external device.

Although the embodiments of the present invention have been described in more detail with reference to the accompanying drawings, the present invention is not necessarily limited to these embodiments, and may be modified in a various manner within the scope of the present invention. Accordingly, the embodiments as disclosed in the present invention are intended to describe rather than limit the technical idea of the present invention, and the scope of the technical idea of the present invention is not limited by these embodiments. Therefore, it should be understood that the embodiments described above are not restrictive but illustrative in all respects. In addition, even though an effect of a configuration of the present invention is not explicitly described in describing the embodiment of the present invention above, it is obvious that the predictable effect from the configuration should be recognized.

### -Explanation of reference numerals-

| | | | |
|---|---|---|---|
| 100: | digital controller door | 200: | OS controller |
| 500: | functional unit | 550: | function controller |
| 1000: | cooking appliance | | |

## Claims

1. A cooking appliance (1000) including a digital controller door (100), the cooking appliance (1000) comprising:
a functional unit (500) configured to provide a cooking function, wherein the functional unit (500) includes a function controller (550) for controlling an operation of the functional unit (500); and
the digital controller door (100), wherein the digital controller door (100) includes an operating system, OS, controller (200) for controlling the digital controller door (100),
wherein the function controller (550) and the OS controller (200) are configured to transmit or receive a packet to or from each other,
wherein the function controller (550) or the OS controller (200) is configured to restrict a function of the functional unit (500) or a function of the digital controller door (100), or to cancel a function being currently executed, based on a transmission and reception status of the packet between the function controller (550) and the OS controller (200).

2. The cooking appliance (1000) including the digital controller door (100) of claim 1, wherein the function controller (550) or the OS controller (200) is configured to:
check a reception status of the packet during a normal state monitoring time duration; and
in response to that no packet is received during the normal state monitoring time duration, re-check the reception status of the packet during an error determination time duration or solve an error.

3. The cooking appliance (1000) including the digital controller door (100) of claim 2, wherein in response to that the function controller (550) does not receive a monitoring packet from the OS controller (200) during the normal state monitoring time duration, the function controller (550) is configured to check whether the monitoring packet is received from the OS controller (200) during the error determination time duration.

4. The cooking appliance (1000) including the digital controller door (100) of claim 2 or 3, wherein when the OS controller (200) transmits a monitoring packet to the function controller (550) and in response to that, the OS controller (200) does not receive a response packet from the function controller (550) during the normal state monitoring time duration, and
the OS controller (200) is configured to check whether the response packet has been received from the function controller (550) during the error determination time duration.

5. The cooking appliance (1000) including the digital controller door (100) of any one of claims 1 to 4, wherein the function controller (550) or the OS controller (200) is configured to store, in an internal memory thereof, a record during a period during which the packet does not communicate between the OS controller (200) and the function controller (550),
wherein when the packet starts to communicate between the OS controller (200) and the function controller (550), the function controller (550) and the OS controller (200) are configured to transmit the records respectively stored in the internal memories thereof to each other.

6. A method for controlling a cooking appliance (1000) including a digital controller door (100), wherein the cooking appliance (1000) includes:
a functional unit (500) configured to provide a cooking function, wherein the functional unit (500) includes a function controller (550) for controlling an operation of the functional unit (500); and
the digital controller door (100), wherein the digital controller door (100) includes an operating system, OS, controller for controlling the digital controller door (100),
wherein the method comprises:
transmitting or receiving, by the function controller (550) and the OS controller (200), a packet to or from each other;
checking, by the function controller (550) or the OS controller (200), a transmission and reception status of the packet; and
restricting, by the function controller (550) or the OS controller (200), a function of the functional unit (500) or a function of the digital controller door (100), or cancelling, by the function controller (550) or the OS controller (200), a function being currently executed, based on the transmission and reception status of the packet.

7. The method for controlling the cooking appliance (1000) of claim 6, wherein the checking of the transmission and reception status further includes:
checking, by the function controller (550) or the OS controller (200), the reception status of the packet during a normal state monitoring time duration; and
in response to that the packet is not received during the normal state monitoring time duration, re-checking, by the function controller (550) or the OS controller (200), the reception status of the packet during an error determination time duration or solving, by the function controller (550) or the OS controller (200), an error.

8. The method for controlling the cooking appliance (1000) of claim 7, wherein the method further comprises:
when the OS controller (200) transmits a monitoring packet to the function controller (550) and in response to that, the OS controller (200) does not receive a response packet from the function controller (550) during a normal state monitoring time duration, and
checking, by the OS controller (200), whether the response packet has been received from the function controller (550) during an error determination time duration.

9. The method for controlling the cooking appliance (1000) of any one of claims 6 to 8, wherein the method further comprises:
storing, by each of the OS controller (200) and the function controller (550), in an internal memory thereof, a record during a period during which the packet does not communicate between the OS controller (200) and the function controller (550); and
in response to that the packet starts to communicate between the OS controller (200) and the function controller (550), transmitting, the function controller (550) and the OS controller (200), the records respectively stored in the internal memories thereof to each other.

10. A cooking appliance (1000) including a digital controller door (100), the cooking appliance (1000) comprising:
a functional unit (500) configured to provide a cooking function;
the digital controller door (100); and
a controller (300) configured to control the functional unit (500) and the digital controller door (100),
wherein the functional unit (500) and the digital controller door (100) are configured to transmit or receive a packet to or from each other,
wherein the controller (300) is configured to restrict a function of at least one of the functional unit (500) or the digital controller door (100) or to cancel a function being currently executed, based on a transmission and reception status of the packet between the functional unit (500) and the digital controller door (100).

11. The cooking appliance (1000) including the digital controller door (100) of claim 10, wherein the controller (300) includes a first section (310) configured to control the functional unit (500) and a second section (320) configured to control the digital controller door (100) ,
wherein the first section (310) uses a first memory (315), and the second section (320) uses a second memory (325).

12. The cooking appliance (1000) including the digital controller door (100) of claim 11, wherein in response to that there is no packet received from the second section (320) for a preset period of time, the first section (310) is configured to cancel a cooking function performed by the functional unit (500) and to maintain or cancel an auxiliary function performed by the functional unit (500) based on a preset value.

13. The cooking appliance (1000) including the digital controller door (100) of claim 11, wherein in response to that there is no packet received from the first section (310) for a preset period of time, the second section (320) is configured to cancel a cooking function of the functional unit (500) and a first function of the digital controller door (100) , and to maintain or cancel an auxiliary function performed by the functional unit (500) and a second function of the digital controller door (100).

14. The cooking appliance (1000) including the digital controller door (100) of any one of claims 10 to 13, wherein in response to that no packet is transmitted and received between the functional unit (500) and the digital controller door (100), the controller (300) is configured to turn off or maintain an operation of an inside lamp or an outside lamp, or turn off or maintain an operation of a ventilation fan (590) in a state in which the ventilation fan (590) is not in an auto ventilation state, based on a preset value.

15. The cooking appliance (1000) including the digital controller door (100) of any one of claims 11 to 14, wherein in response to that no packet is received from the second section (320) during a preset period, the first section (310) is configured to cancel the operation of the functional unit,
wherein in response to that no packet is received from the first section (310) during a preset period, the second section (320) is configured to check whether there is packet received from the first section (310) during an error determination time duration and then cancel a function of the digital controller door (100).
